# EUROPEAN PATENT APPLICATION

(11) **EP 4 796 799 A1**
(43) Date of publication of application: **26.08.2026**
(21) Application number: 26158207.6
(22) Date of filing: 12.02.2026
(51) Int. Cl.: F16B 25/00, F16B 25/10

(54) **SCREW**

(30) Priority: 20.02.2025 TW 114106290
(71) Applicant: Chao, Ying-Chin, Kaohsiung City 82443 (TW)
(72) Inventor: Chao, Ying-Chin, Kaohsiung City 82443 (TW)
(74) Representative: Germain Maureau

(57) **Abstract**

A screw includes a head (2), a rod body (3), a tip tail (4), a main thread (5), a drill thread (6), and at least one buffer thread (7). The rod body (3) extends from the head (2) along an axis (L). The tip tail (4) is formed on one end of the rod body (3) opposite to the head (2). The main thread (5) has an upper thread surface (51) facing the head (2), and a lower thread surface (52) cooperating with the upper thread surface (51) to define a main thread angle (As). The at least one buffer thread (7) is formed on at least one of the rod body (3) and the tip tail (4), and has a first thread surface (71) facing the head (2), and a second thread surface (72) connected to the first thread surface (71) and cooperating with the first thread surface (71) to define an operation angle (Ar). The operation angle (Ar) is greater than the main thread angle (As).

## Description

The disclosure relates to a fastener, and more particularly to a screw.

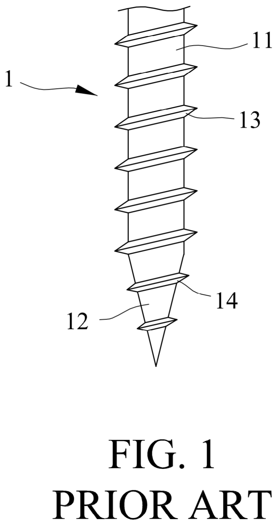

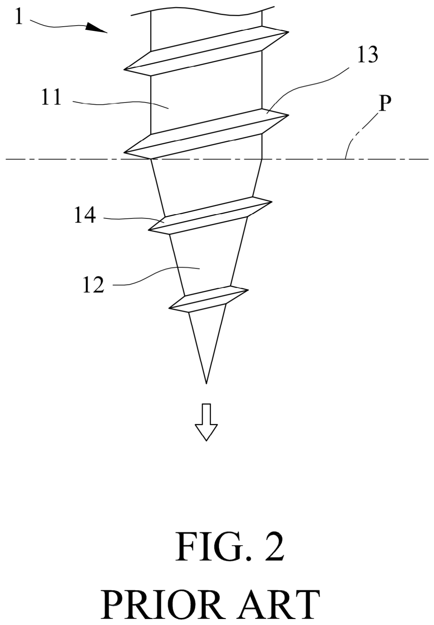

Referring to FIG. 1, a conventional pointed end screw 1 includes a shank body 11, a tip tail 12 that is connected to an end of the shank body 11 and that tapers away from the shank body 11, a main thread 13 that helically extends around the shank body 11, and a drill thread 14 that helically extends around the tip tail 12. Referring to FIG. 2, when the conventional pointed end screw 1 is being drilled into an object (P) (e.g., a wooden plate) with the tip tail 12 thereof, the drill thread 14 cuts the object (P), compresses a portion of dregs (not shown), and discharge another portion of the dregs. When the conventional pointed end screw 1 is screwed into the object (P) to an extent that the shank body 11 reaches the object (P), the main thread 13 takes over from the drill thread 14 and keeps cutting the object (P) so that the conventional pointed end screw 1 may be screwed into the object (P) to a required depth.

In the above-mentioned drilling process of the conventional pointed end screw 1, the drill thread 14 cuts off fibers of the object (P) when cutting the object (P). The dregs that are generated when the fibers are cut are compressed aside (i.e., pushed toward the object (P)) so that the conventional pointed end screw 1 may have a larger space to be drilled deeper into the object (P). However, the deeper the conventional pointed end screw 1 is being drilled into the object (P), the larger the resistance from the object (P) and the dregs is acted on the conventional pointed end screw 1. Therefore, after a certain period, the conventional pointed end screw 1 may only be able to cut and compress the fibers of the object (P), and may not be able to discharge a great amount of the dregs. Consequently, the resistance that stops or slows the drilling process of the conventional pointed end screw 1 may be generated, and the object (P) may apply pressures to the conventional pointed end screw 1 in several directions, thereby greatly affecting the smoothness of the drilling process. In addition, when the conventional pointed end screw 1 keeps pushing the dregs toward the object (P) under such resistance during the drilling process, the object (P) may split.

Therefore, an object of the disclosure is to provide a screw that can alleviate at least one of the drawbacks of the prior art.

According to an aspect of the disclosure, there is provided a screw according to claim 1.

According to another aspect of the disclosure, there is provided a screw according to claim 26.

Other features and advantages of the disclosure will become apparent in the following detailed description of the embodiment(s) with reference to the accompanying drawings. It is noted that various features may not be drawn to scale.
FIG. 1 is a fragmentary, enlarged side view of a conventional pointed end screw.
FIG. 2 is a schematic view illustrating the conventional pointed end screw drilling an object.
FIG. 3 is a side view of a first embodiment of a screw according to the disclosure.
FIG. 4 is a fragmentary, enlarged side view illustrating a buffer thread of the first embodiment.
FIG. 5, FIG. 5-1 and FIG. 5-2 are fragmentary, enlarged side views similar to FIG. 4, illustrating modifications of the first embodiment.
FIG. 6 is a schematic view illustrating the first embodiment drilling an object.
FIG. 7 is a fragmentary side view illustrating a buffer thread of a modification of the first embodiment having a plurality of thread grooves.
FIG. 8, FIG. 8-1, FIG. 8-2, FIG. 8-3 and FIG. 8-4 are fragmentary, enlarged side views of other modifications of the first embodiment.
FIGS. 9 and 10 are side views of other modifications of the first embodiment.
FIG. 11 and FIG. 11-1 are fragmentary side views of other modifications of the first embodiment different from the modifications shown in FIGS. 9 and 10.
FIG. 12, FIG. 12-1, FIG. 12-2, FIG. 12-3, FIG. 12-4 and FIG. 13 are fragmentary, enlarged side views illustrating a second embodiment of the screw according to the disclosure, and illustrating modifications of the second embodiment.
FIG. 14, FIG. 14-1, FIG. 14-2, FIG. 14-3, FIG. 15, FIG. 15-1, FIG. 15-2, FIG. 15-3, FIG. 15-4, FIG. 16, FIG. 16-1, FIG. 16-2, FIG. 16-3, FIG. 16-4, FIG. 16-5, FIG. 17, FIG. 17-1, FIG. 17-2, FIG. 17-3, FIG. 17-4, FIG. 18 and FIG. 18-1 are fragmentary, enlarged side views similar to FIG. 12, illustrating different configurations of a reinforcement member of the second embodiment.
FIG. 17A, FIG. 17B, FIG. 18A and FIG. 18B are sectional views of some of the different configurations of the reinforcement member of the second embodiment.
FIG. 18-2 is a fragmentary, enlarged side view illustrating a buffer portion of a main thread of the second embodiment.
FIG. 19 and FIG. 20 are fragmentary side views illustrating that in some modifications of the second embodiment, the reinforcement member includes a plurality of reinforcement members.
FIG. 21, FIG. 22, FIG. 23, FIG. 23-1 and FIG. 23-2 are fragmentary, enlarged side views of other modifications of the second embodiment.
FIG. 24, FIG. 24-1 and FIG. 24-2 are fragmentary, sectional schematic views illustrating a third embodiment of the screw according to the disclosure.
FIG. 25, FIG. 26, FIG. 27, FIG 27-1 and FIG. 27-2 are fragmentary, sectional schematic views illustrating modifications of the third embodiment.
FIG. 28, FIG. 29, FIG 29-1 and FIG. 29-2 are fragmentary, enlarged sectional views illustrating a fourth embodiment of the screw according to the disclosure.
FIG. 30, FIG. 31 and FIG. 32 are fragmentary, enlarged side views illustrating modifications of the fourth embodiment.
FIG. 33 and FIG. 34 are fragmentary, sectional schematic views illustrating a fifth embodiment of the screw according to the disclosure.
FIG. 35, FIG. 35-1 and FIG. 35-2 are fragmentary, sectional schematic views illustrating at least one reinforcement member of the fifth embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

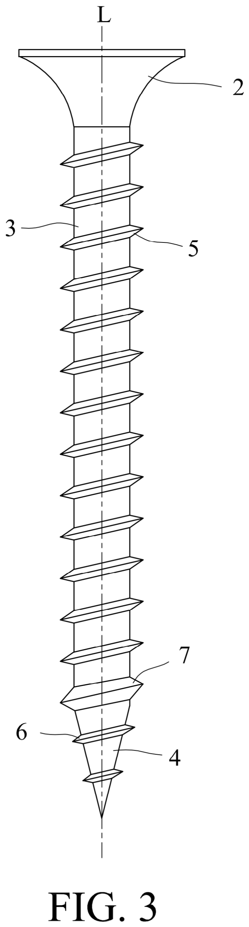

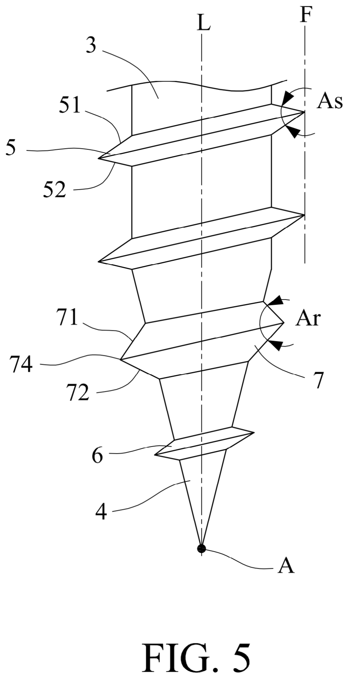

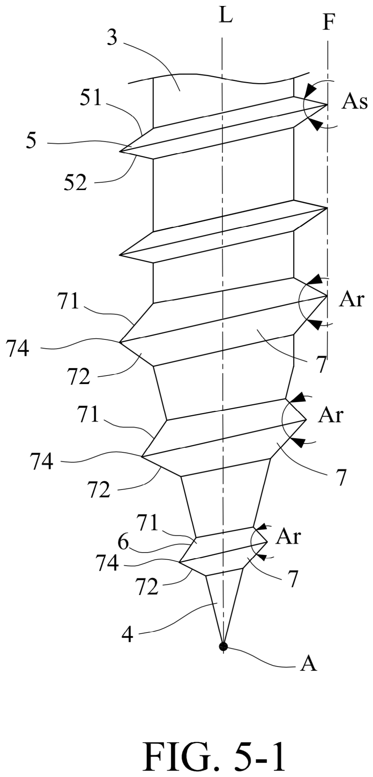

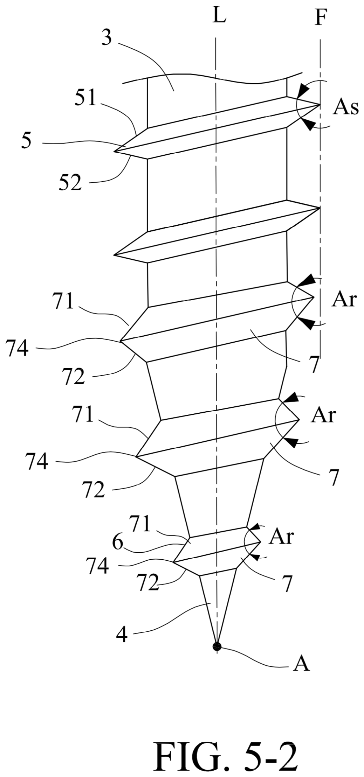

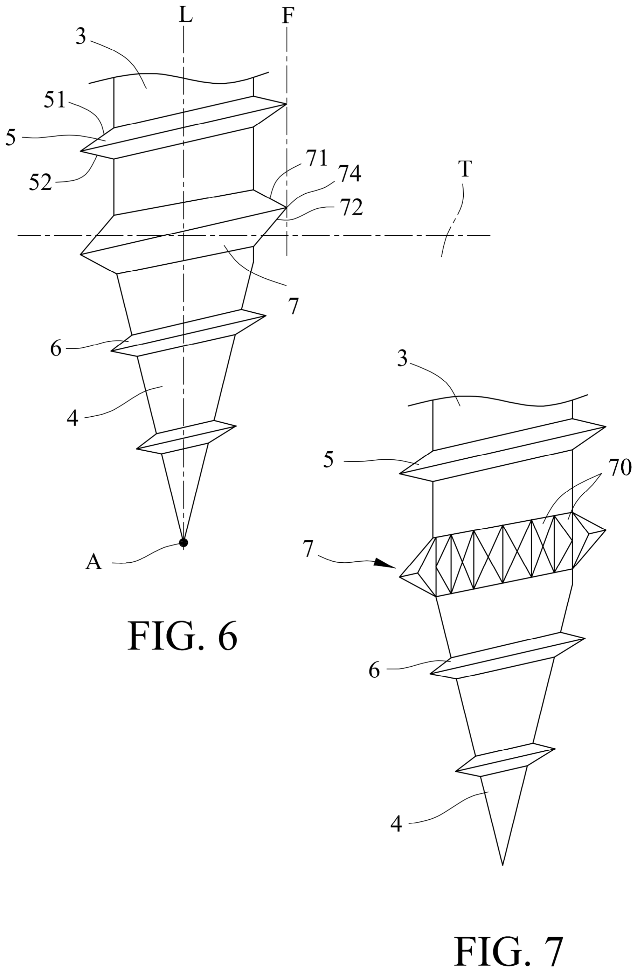

Referring to FIG. 3, a first embodiment of a screw according to the present disclosure includes a head 2, a rod body 3, a tip tail 4, a main thread 5, a drill thread 6, and at least one buffer thread 7. The rod body 3 extends from the head 2 along an axis (L). The tip tail 4 is formed on one end of the rod body 3 opposite to the head 2, and tapers away from the rod body 3 along the axis (L). The main thread 5 helically extends around the rod body 3. The drill thread 6 helically extends around the tip tail 4. The at least one buffer thread 7 is formed on at least one of the rod body 3 and the tip tail 4. In the first embodiment, the at least one buffer thread 7 is formed between the main thread 5 and the drill thread 6. In some embodiments, the at least one buffer thread 7 may be formed on at least one of the main thread 5 and the drill thread 6. In some embodiments similar to those shown in FIG. 5-1 and FIG. 5-2, the at least one buffer thread 7 may continuously extend from at least one of the main thread 5 and the drill thread 6. The head 2 is adapted for a twisting tool (e.g., a screwdriver or a power drill) (not shown) to be positioned thereon so that a twisting force may be exerted on the first embodiment, thereby urging the first embodiment to drill an object (T) (see FIG. 6). When the first embodiment is inserted into the object (T), the head 2 may serve as a limitation that limits a position of the first embodiment and that is located at an upper end of the rod body 3.

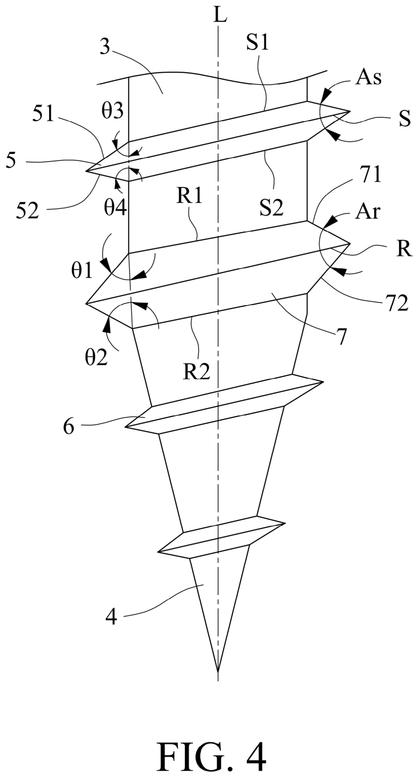

Referring to FIGS. 3 and 4, the main thread 5 has an upper thread surface 51 that faces the head 2, and a lower thread surface 52 that cooperates with the upper thread surface 51 to define a main thread angle (As). The lower thread surface 52 is connected to the upper thread surface 51. Because the drill thread 6 is formed on the tip tail 4 that serves as a first section of the first embodiment which drills the object (T), a diameter of the drill thread 6 in a radial direction perpendicular to an extending direction of the axis (L) decrease as a diameter of the tip tail 4 in the radial direction decreases. Consequently, a height of the drill thread 6 is shorter than a height of the main thread 5 in the radial direction. It is noted that, as used herein, the term "height" refers to a distance between the axis (L) and a crest of a thread (e.g., the main thread 5 or the drill thread 6) in the radial direction. In some embodiments, the main thread 5 may continuously extend from the drill thread 6. In some embodiments, the main thread 5 may not be directly connected to the drill thread 6.

In some embodiments, the at least one buffer thread 7 may continuously extend from the main thread 5 (i.e., the at least one buffer thread 7 is directly connected to the main thread 5). In some embodiments, the at least one buffer thread 7 may be spaced apart from the main thread 5 and may not be directly connected to the main thread 5. Similarly, in some embodiments, the at least one buffer thread 7 may continuously extend from the drill thread 6. In some embodiments, the at least one buffer thread 7 may be spaced apart from the drill thread 6 and may not be directly connected to the drill thread 6.

The at least one buffer thread 7 has a first thread surface 71 that faces the head 2, and a second thread surface 72 that is connected to the first thread surface 71 and that cooperates with the first thread surface 71 to define an operation angle (Ar). The operation angle (Ar) is greater than the main thread angle (As). When the operation angle (Ar) is greater than the main thread angle (As), a minor diameter of the at least one buffer thread 7 may be smaller than a minor diameter of the main thread 5. The at least one buffer thread 7 has at least one turn on at least one of the rod body 3 and the tip tail 4. In some embodiment, the at least one buffer thread 7 may have a plurality of continuous turns or a plurality of discontinuous turns on both of the rod body 3 and the tip tail 4 (i.e., the at least one buffer thread 7 helically extends from the tip tail 4 to the rod body 3). In the first embodiment, the at least one buffer thread 7 has, for example, only one turn. A junction of the first thread surface 71 and the second thread surface 72 of the at least one buffer thread 7 defines a crest line (R). A junction of the rod body 3 and the first thread surface 71 of the at least one buffer thread 7 defines a junction line (R1). A junction of the rod body 3 and the second thread surface 72 of the at least one buffer thread 7 defines a junction line (R2). A junction of the upper thread surface 51 and the lower thread surface 52 of the main thread 5 defines a crest line (S). A junction of the rod body 3 and the upper thread surface 51 defines a junction line (S1). A junction of the rod body 3 and the lower thread surface 52 defines a junction line (S2). Even though the crest line (R) and the crest line (S) are respectively defined by the at least one buffer thread 7 and the main thread 5, the crest line (R) and the crest line (S) are located on a same helical line. Referring to FIG. 4, according to a side view of the first embodiment, the main thread 5 may be defined to be a symmetrical thread when the crest line (S) evenly divides the main thread angle (As) into two divided angles, may be defined to be an asymmetrical thread when the crest line (S) does not evenly divide the main thread angle (As) into two divided angles, and may be defined to be an arrowy thread when the crest line (S) does not evenly divide the main thread angle (As) into two divided angels and when one of the two divided angles is no greater than 15 degrees. Similarly, the at least one buffer thread 7 may be defined to be a symmetrical thread when the crest line (R) evenly divides the operation angle (Ar) into two divided angles (i.e., the at least one buffer thread 7 is symmetrical along the crest line (R)), may be defined to be an asymmetrical thread when the crest line (R) does not evenly divide the operation angle (Ar) into two divided angles (i.e., the at least one buffer thread 7 is asymmetrical along the crest line (R)), and may be defined to be an arrowy thread when the crest line (R) does not evenly divide the operation angle (Ar) into two divided angles and when one of the two divided angles is no greater than 15 degrees. In the first embodiment, each of the main thread 5 and the at least one buffer thread 7 is shown as a symmetrical thread. Other types of threads that are not shown are based on definitions above, and detailed descriptions for those threads are omitted for the sake of brevity.

The first thread surface 71 of the at least one buffer thread 7 cooperates with the rod body 3 to define a first included angle (θ1) therebetween. The second thread surface 72 of the at least one buffer thread 7 cooperates with the rod body 3 to define a second included angle (θ2) therebetween. The upper thread surface 51 cooperates with the rod body 3 to define a third included angle (θ3) therebetween. The lower thread surface 52 cooperates with the rod body 3 to define a fourth included angle (θ4) therebetween. The first included angle (θ1) is no greater than the third included angle (θ3). The second includes angle (θ2) is no greater than the fourth included angle (θ4) (i.e., the second included angle (θ2) may be smaller or equal to the fourth included angle (θ4)). It is noted that, the type of the main thread 5 and the type of the at least one buffer thread 7 may be the same or different. In one embodiment, the main thread 5 may be the symmetrical thread and the at least one buffer thread 7 may be the asymmetrical thread. When the first included angle (θ1) is smaller than the third included angle (03) and when the second included angle (θ2) is no greater than the fourth included angle (θ4), a height of the at least one buffer thread 7 in the radial direction perpendicular to the extending direction of the axis (L) is no greater than the height of the main thread 5 in the radial direction. When the first included angle (θ1) is no greater than the third included angle (θ3) and when the second included angle (θ2) is smaller than the fourth included angle (θ4), the height of the at least one buffer thread 7 in the radial direction is no greater than the height of the main thread 5 in the radial direction. A difference between the height of the at least one buffer thread 7 and the height of the main thread 5 is dependent on differences among the first included angle (θ1), the second included angle (θ2), the third included angle (θ3) and the fourth included angle (θ4), and a location of the at least one buffer thread 7 (e.g., when the at least one buffer thread 7 is formed on the rod body 3 or on the tip tail 4). For example, the height of the at least one buffer thread 7 may range from "two-thirds of a difference between a major diameter of the at least one buffer thread 7 and the minor diameter of the at least one buffer thread 7 plus the minor diameter of the at least one buffer thread 7 minus 3" to "two-thirds of a difference between a major diameter of the at least one buffer thread 7 and the minor diameter of the at least one buffer thread 7 plus the minor diameter of the at least one buffer thread 7 plus 2" and be measured in millimeters as a unit thereof. In some embodiments, the height of the at least one buffer thread 7 may be obtained by actual measurements, and detailed descriptions for the actual measurements are omitted for the sake of brevity.

Because the operation angle (Ar) is greater than the main thread angle (As), a length of the at least one buffer thread 7 in the extending direction of the axis (L) is greater than a length of the main thread 5 in the extending direction of the axis (L). When a difference between the operation angle (Ar) and the main thread angle (As) increases, a difference between the height of the at least one buffer thread 7 in the radial direction and the height of the main thread 5 in the radial direction increases. In one embodiment, in order to maintain a required pull-out strength, the difference between the operation angle (Ar) and the main thread angle (As) may be about 20 degrees (e.g., when the main thread angle (As) ranges from about 37 degrees to 43 degrees, the operation angle (Ar) ranges from about 57 degrees to 63 degrees). In one embodiment, the operation angle (Ar) is 20 degrees greater than the main thread angle (As). Given the manufacturing cost of the screw, in one embodiment, the difference between the operation angle (Ar) and the main thread angle (As) may range from about 4 degrees to about 12 degrees. In one embodiment, the operation angle (Ar) and the main thread angle (As) have a maximum difference and a minimum difference therebetween, and the minimum difference is one-third of the maximum difference. Given production efficiency and the pull-out strength of the screw, in one embodiment, the difference between the operation angle (Ar) and the main thread angle (As) may range from about 25 degrees to about 40 degrees. Given cost of production of the screw, in one embodiment, the operation angle (Ar) may be about 5 degrees to about 15 degrees greater than a maximum limit of the main thread angle (As) (e.g., the operation angle (Ar) may be about 5 degrees to about 15 degrees greater than the main thread angle (As)). In one embodiment, the operation angle (Ar) may be determined by the height of the at least one buffer thread 7 in the radial direction. When the height of the at least one buffer thread 7 in the radial direction is a quarter to a half of the height of the main thread 5 in the radial direction, a resistance that the screw encounters when drilling the object (T) may be efficiently reduced, and the required pull-out strength may still be maintained. When the height of the at least one buffer thread 7 in the radial direction is smaller than a quarter of the height of the main thread 5 in the radial direction, the resistance that the screw encounters when drilling the object (T) may still be reduced, and the required pull-out strength may be increased. When the height of the at least one buffer thread 7 in the radial direction is greater than a halt of the height of the main thread 5 in the radial direction (e.g., when the height of the at least one buffer thread 7 is two-thirds or four-fifths of the height of the main thread 5), it may be relatively easy for the screw to drill the object (T), but the pull-out strength may be reduced. It is noted that, as long as the operation angle (Ar) is greater than the main thread angle (As), the purpose of the present disclosure may be achieved. In summary, the difference between the operation angle (Ar) and the main thread angle (As) may range from about 14 degrees to about 26 degrees, but may not be limited thereto.

It is noted that performance of the at least one buffer thread 7 may be determined by the operation angle (Ar) and the height of the at least one buffer thread 7. The performance is improved as the operation angle (Ar) is increased and as the difference between the height of the at least one buffer thread 7 and the height of the main thread 5 in the radial direction is reduced. However, the manufacturing cost may increase and the pull-out strength may be affected accordingly.

Referring to FIG. 5, in one modification of the first embodiment, the at least one buffer thread 7 is formed on the tip tail 4 instead of being formed on the rod body 3 as shown in FIG. 3. The at least one buffer thread 7 may assist the drill thread 6 with drilling as long as the at least one buffer thread 7 is located between the head 2 and a drilling tip (A) that is located at an end of the modification opposite to the head 2. Specifically, the at least one buffer thread 7 may have one or two turn(s) between the head 2 and the drilling tip (A) to assist the drill thread 6 with drilling. Referring to FIGS. 5 and 6, an imaginary line that is parallel to the axis (L) and that extends through crests of the main thread 5 is defined to be a reference line (F) (i.e., a distance between the axis (L) and the reference line (F) in the radial direction is a half of a major diameter of the main thread 5). The at least one buffer thread 7 further has an outer thread edge 74 that is located at the junction of the first thread surface 71 and the second thread surface 72 thereof. The outer thread edge 74 of the at least one buffer thread 7 is located between the axis (L) and the reference line (F), and may not be located beyond an area defined by the axis (L) and the reference line (F). A distance between the axis (L) and the outer thread edge 74 of the at least one buffer thread 7 in the radial direction may be shorter than the distance between the axis (L) and the reference line (F) in the radial direction as shown in FIG. 5-2, or may be equal to the distance between the axis (L) and the reference line (F) in the radial direction as shown in FIG. 6. It is noted that, the at least one buffer thread 7 may helically extend around the rod body 3 as shown in FIG. 3, may helically extend around the tip tail 4 as shown in FIG. 5, or may helically extend from the tip tail 4 to the rod body 3. When the at least one buffer thread 7 helically extends from the tip tail 4 to the rod body 3, a section of the at least one buffer thread 7 that is formed on the tip tail 4 may be spaced apart from another section of the at least one buffer thread 7 that is formed on the rod body 3 (i.e., the at least one buffer thread 7 does not continuously extend from the tip tail 4 to the rod body 3), or the at least one buffer thread 7 may continuously extend from the tip tail 4 to the rod body 3 as shown in FIG. 5-1. The configuration of the at least one buffer thread 7 shown in FIG. 5-1 may reduce the manufacturing cost of the screw and improve the production efficiency of the screw.

Referring to FIGS. 4, 5, 5-1, 5-2 and 6, according to actual requirements, a size of the at least one buffer thread 7 may be adjusted by adjusting at least one of the first included angle (θ1), the second included angle (θ2), the third included angle (θ3) and the fourth included angle (θ4). In one modification, the at least one buffer thread 7 is formed on the rod body 3, and the distance between the axis (L) and the outer thread edge 74 of the at least one buffer thread 7 in the radial direction may be shorter than the distance between the axis (L) and the reference line (F) in the radial direction as shown in FIG. 5 - 2. Such modification may improve the pull-out strength of the screw, and may be a better modification of the first embodiment. It is noted that, a configuration of the at least one buffer thread 7 in which the at least one buffer thread 7 is formed on the rod body 3 is exemplified for describing modifications/embodiments in the following descriptions, and the at least one buffer thread 7 may have a better performance when the at least one buffer thread 7 is formed on the rod body 3 and when the at least one buffer thread 7 is adjacent to the tip tail 4. Detailed descriptions and drawings for configurations of the at least one buffer thread 7 in which the at least one buffer thread 7 is formed on the tip tail 4 or in which the at least one buffer thread 7 extends from the tip tail 4 to the rod body 3 may be similar to the configuration of the at least one buffer thread 7 in which the at least one buffer thread 7 is formed on the rod body 3, and are thus omitted for the sake of brevity.

Referring to FIGS. 4 and 6, a situation in which the first embodiment is being drilled into the object (T) is exemplified for description purposes. When the drilling tip (A) of the tip tail 4 is in contact of the object (T), the drill thread 6 cuts the object (T) and is gradually screwed into the object (T) as long as the first embodiment is screwed. When the drill thread 6 of the first embodiment is screwed into the object (T) to an extent that a junction of the tip tail 4 and the rod body 3 reaches the object (T), dregs that are generated during the drilling process of the drill thread 6 are discharged and guided to the at least one buffer thread 7. When the at least one buffer thread 7 is screwed into the object (T), a portion of the dregs is compressed by the at least one buffer thread 7 against an inner hole wall of the object (T) so that the dregs may be prevented from becoming obstructions during the drilling process. At this time, by virtue of the operation angle (Ar) being greater than the main thread angle (As), a path that is formed in the object (T) during the drilling process may be relatively wide. Thus, when the first embodiment is further screwed into the object (T), spiral space in the object (T) that is generated by the at least one buffer thread 7 may assist with the discharge of the dregs so that the resistance which the first embodiment encounters while being drilled into the object (T) may be reduced, thereby facilitating the drilling process.

It is noted that, the spiral space is a difference between a volume of the main thread 5 and a volume of the at least one buffer thread 7. When the first embodiment is screwed deeper into the object (T), the spiral space serves as a dregs-discharging channel, and serves as a dreg-accommodating space for a portion of the dregs that are not capable of being discharged immediately due to fast rotations of the first embodiment during the drilling process. In addition, by virtue of the spiral space, pressures that the object (T) applies to thread surfaces (e.g., the upper thread surface 51, the second thread surface 72, etc.) of the first embodiment may be reduced, thereby improving drilling effects of the first embodiment. When the at least one buffer thread 7 has more than two turns, a distance between the main thread 5 and one of the turns of the at least one buffer thread 7 may be equal to or different from a distance between two adjacent turns of the at least one buffer thread 7.

When the at least one buffer thread 7 has a plurality of turns, the operation angle (Ar) of the at least one buffer thread 7 in one of the turns of the at least one buffer thread 7 may be equal to or different from the operation angle (Ar) of the at least one buffer thread 7 in another one of the turns of the at least one buffer thread 7. In one embodiment, the operation angle (Ar) of the at least one buffer thread 7 increases as the at least one buffer thread 7 extends toward the head 2. For example, when the at least one buffer thread 7 has three turns, the operation angle (Ar) of the at least one buffer thread 7 in the first turn thereof may be 45 degrees and then gradually increase such that the operation angle (Ar) of the at least one buffer thread 7 in the second turn thereof is 53 degrees and that the operation angle (Ar) of the at least one buffer thread 7 in the third turn thereof is 60 degrees. In one embodiment, the operation angle (Ar) of the at least one buffer thread 7 decreases as the at least one buffer thread 7 extends toward the head 2. In one embodiment, the operation angle (Ar) of the at least one buffer thread 7 arbitrarily varies as the at least one buffer thread 7 extends toward the head 2. For example, when the at least one buffer thread 7 has three turns, the operation angle (Ar) of the at least one buffer thread 7 in the second turn thereof may be smaller than the operation angle (Ar) of the at least one buffer thread 7 in each of the first turn and the third turn thereof, or be greater than the operation angle (Ar) of the at least one buffer thread 7 in each of the first turn and the third turn thereof. As long as the operation angle (Ar) is greater than the main thread angle (As), the dregs may be efficiently discharged, and the resistance that the screw encounters when being drilled into the object (T) may be efficiently reduced. Moreover, embodiments and modification that have better effects are taken as examples in the present disclosure. In those examples, the at least one buffer thread 7 is adjacent to the tip tail 4. However, the at least one buffer thread 7 may be formed on the rod body 3 and be adjacent to the head 2, and the configuration thereof may not be limited to the configurations disclosed in those examples.

Referring to FIG. 7, in another modification of the first embodiment, the at least one buffer thread 7 further has a plurality of thread grooves 70 that are indented toward the axis (L) in the radial direction, that surround the axis (L), and that are spaced apart from each other. By virtue of the thread grooves 70, an outer side of the at least one buffer thread 7 may have a shape of a saw so that the at least one buffer thread 7 may have a better performance in cutting fibers of the object (T) during the drilling process. Furthermore, the fibers that are cut and the dregs may be quickly discharged and guided to the spiral space by the thread grooves 70.

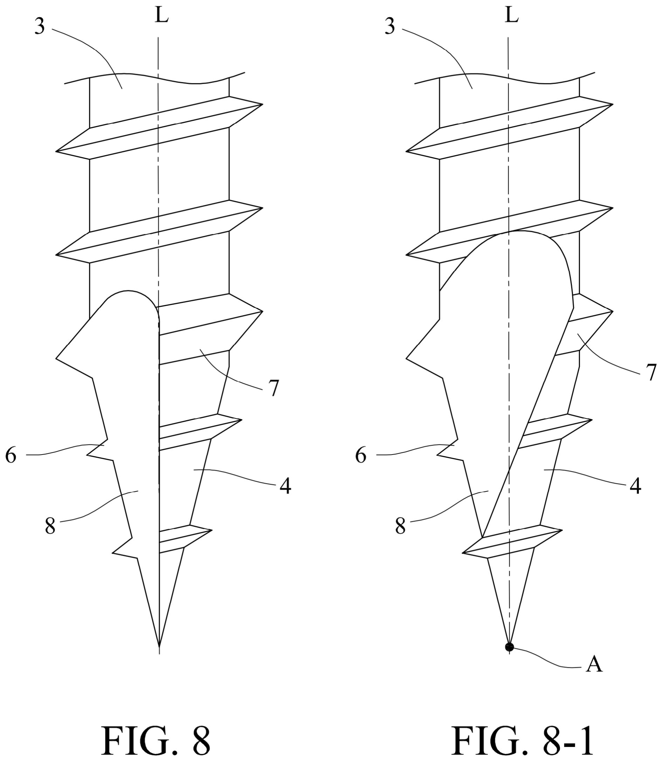

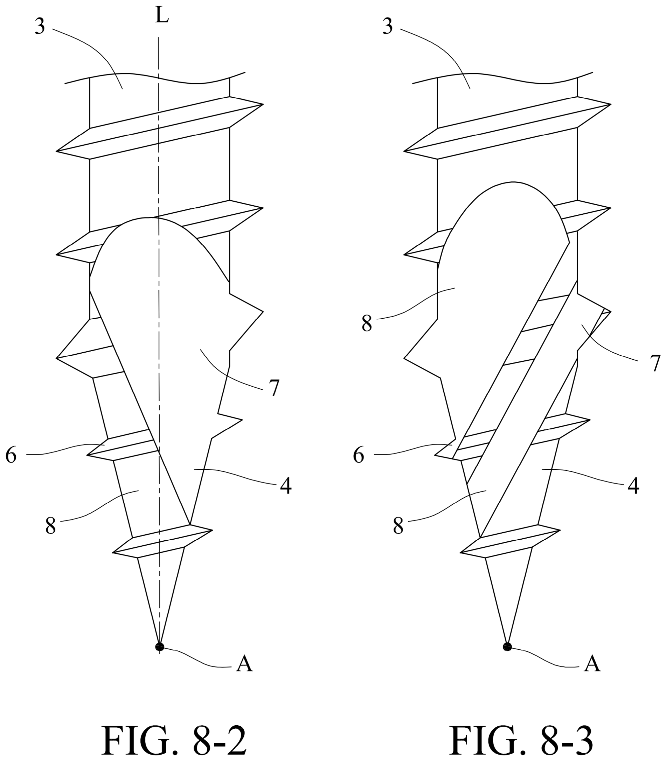

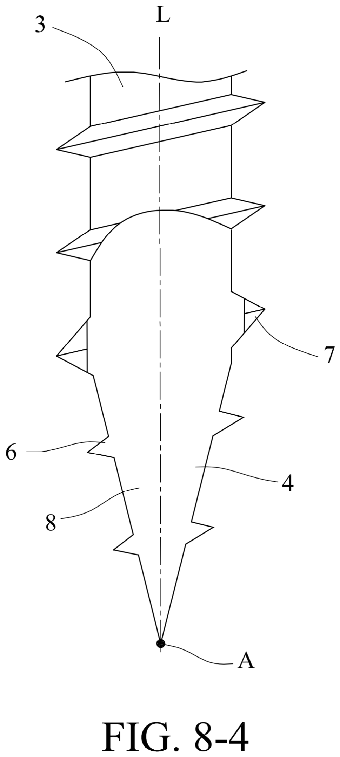

Referring to FIG. 8, in other modifications of the first embodiment, the screw further has a cutting edge 8 that is concave. A portion of the cutting edge 8 extends to the tip tail 4. The cutting edge 8 may achieve an effect similar to a cutting blade. By virtue of the cutting edge 8, the dregs may be discharged to the at least one buffer thread 7 and the spiral space quickly. The cutting edge 8 assists the drill thread 6 with drilling the object (T) (see FIG. 6) so that the performance of the drill thread 6 is improved. It is noted that, a periphery of the cutting edge 8 may be parallel to the axis (L) as shown in FIG. 8, or may be oblique to the axis (L) as shown in FIGS. 8-1 and 8-2. In one modification as shown in FIG. 8-3, the screw may have two cutting edges 8. In one modification as shown in FIG. 8-4, the cutting edge 8 may be formed by cutting a portion of the screw off in the extending direction of the axis (L). The cutting edge 8 may extend from the drilling tip (A) toward the head 2, or may extend from a second thread, counted from the drilling tip (A), toward the head 2. The cutting edge 8 may achieve a best cutting performance when the cutting edge 8 extends from a second thread or a third thread, counted from the drilling tip (A) toward the head 2 (i.e., when there is/are one/two thread(s) between the drilling tip (A) and the cutting edge 8 in the extending direction of the axis (L)). When the cutting edge 8 extends across the at least one buffer thread 7, a speed of discharging the dregs may further be increased so that the resistance that the screw encounters when drilling the object (T) may be reduced.

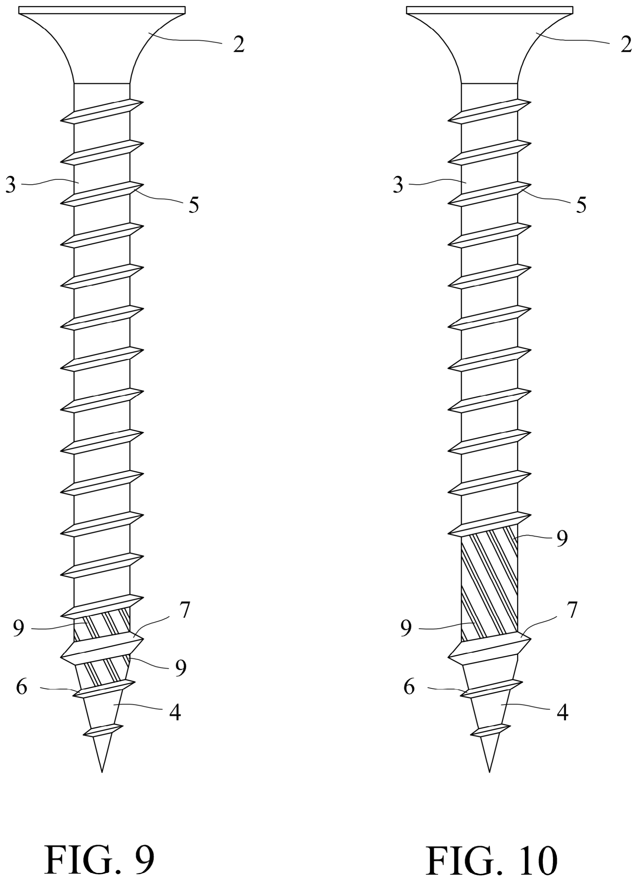

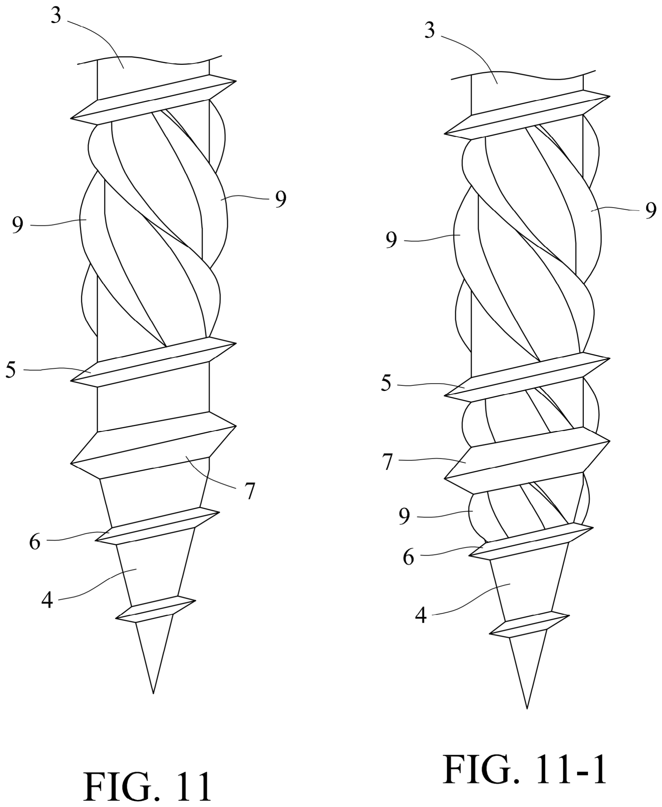

Referring to FIGS. 9 to 11, in other modifications of the first embodiment, the screw further has a plurality of ribs 9 that are formed on the rod body 3. The ribs 9 intersect at least one of the main thread 5, the drill thread 6, and the at least one buffer thread 7. A projection of at least one of the ribs 9 at least partially overlaps a projection with the at least one of the main thread 5, the drill thread 6 and the at least one buffer thread 7. The ribs 9 facilitate expansion of a drilled hole during the drilling process, thereby enhancing the effect of reducing the resistance that the screw encounters when drilling the object (T). It is noted that, in FIG. 9, the ribs 9 intersect the at least one butter thread 7. However, in one modification as shown in FIG. 10, the ribs 9 may be located differently (e.g., between the main thread 5 and the at least one buffer thread 7), and a length of each of the ribs 9 may be adjusted according to actual requirements. Locations and lengths of the ribs 9 may not be limited to the configurations of the ribs 9 shown in FIGS. 9 and 10. The ribs 9 may not be limited to be oblique and straight when the screw is viewed from one side as shown in FIGS. 9 and 10, and may helically extend around the rod body 3 as shown in FIG. 11. In one modification as shown in FIG. 11-1, the ribs 9 may extend from the rod body 3 to the tip tail 4, and such configuration of the ribs 9 may facilitate the expansion of a drilled hole during the drilling process as well.

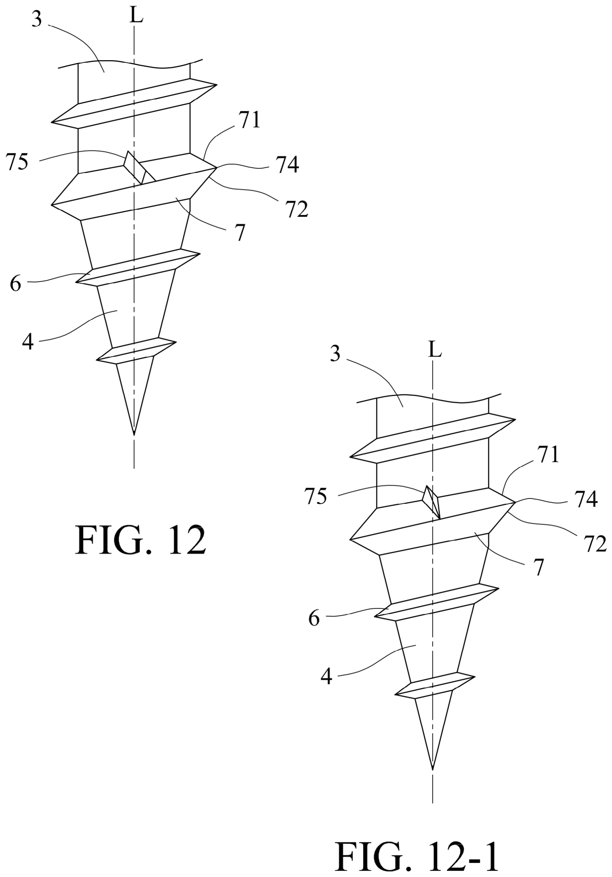

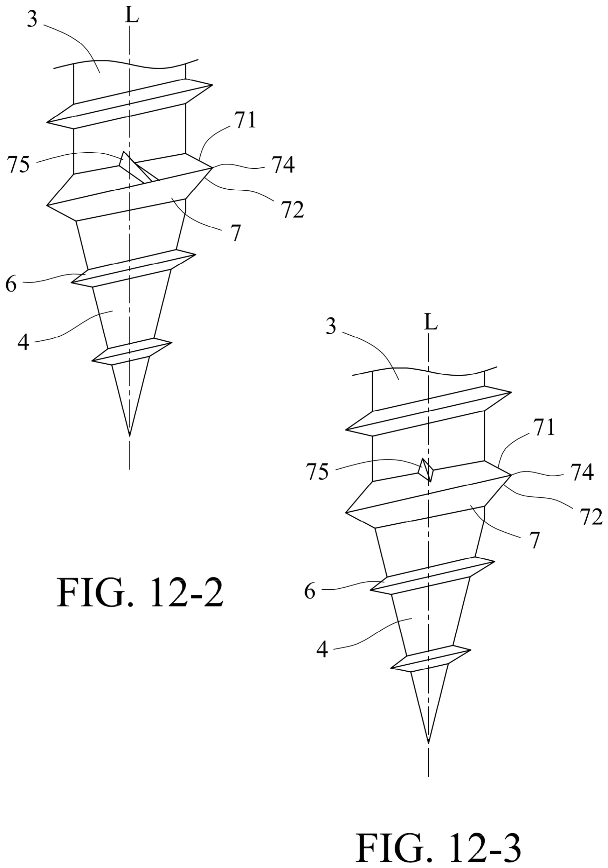

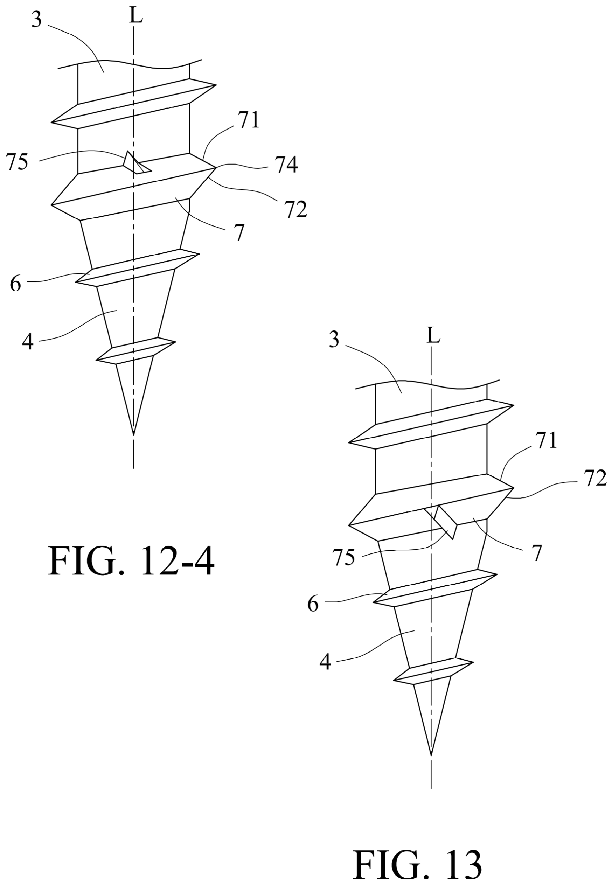

Referring to FIGS. 12 and 13, a second embodiment of the screw according to the present disclosure differs from the first embodiment in a structural design of the at least one buffer thread 7. In the second embodiment, the at least one buffer thread 7 includes at least one reinforcement member 75 that protrudes from and extends along at least one of the first thread surface 71 and the second thread surface 72 thereof. For convenience of description, in the second embodiment, the at least one reinforcement member 75 includes only one reinforcement member 75, but a number of the at least one reinforcement member 75 may not be limited thereto. The reinforcement member 75 may be formed on the first thread surface 71 of the at least one buffer thread 7 as shown in FIG. 12, or may be formed on the second thread surface 72 of the at least one buffer thread 7 as shown in FIG. 13, thereby enhancing a cutting performance of the at least one buffer thread 7 during the drilling process.

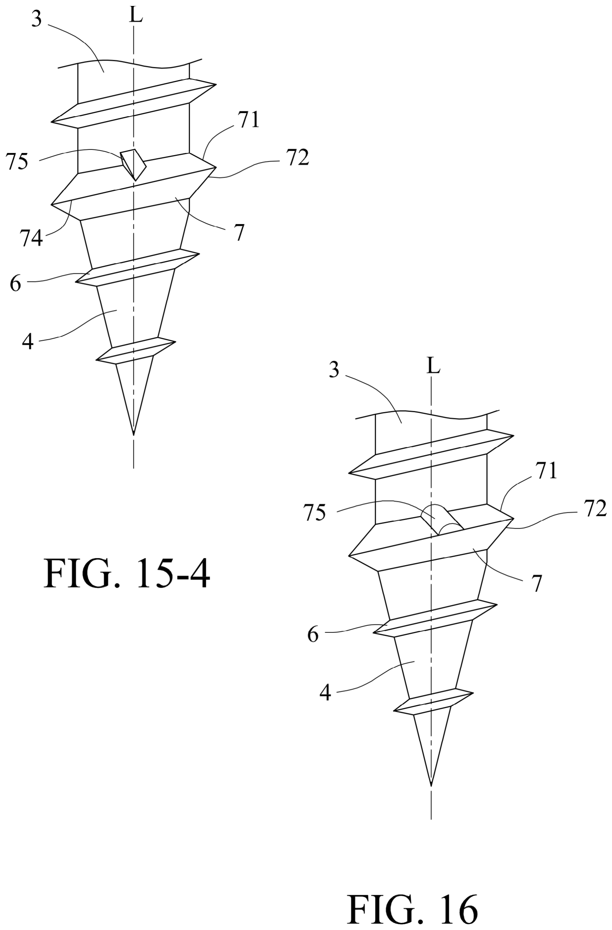

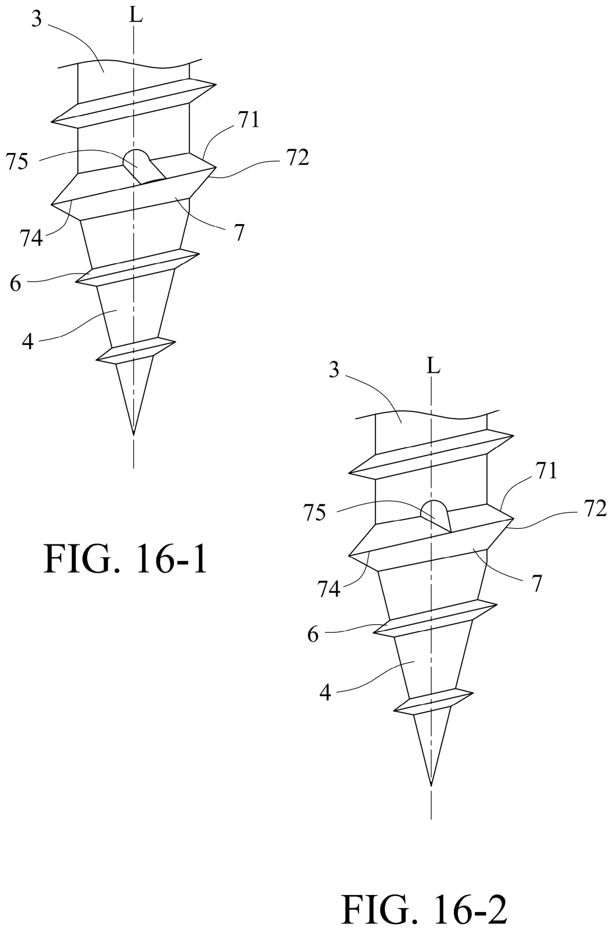

In some modifications, a length of the reinforcement member 75 in the extending direction of the axis (L) may remain unchanged as the reinforcement member 75 extends in the radial direction along the at least one of the first thread surface 71 and the second thread surface 72 as shown in FIGS. 12, 13, 14, 15, 16, 17, and 18. In some modifications, the length of the reinforcement member 75 may decrease as the reinforcement member 75 extends in the radial direction along the at least one of the first thread surface 71 and the second thread surface 72. Specifically, the length of the reinforcement member 75 may decrease as the reinforcement member 75 extends from the rod body 3 to the outer thread edge 74 of the at least one buffer thread 7 as shown in FIGS. 12-1, 14-1, 15-1 to 15-4, 16-1, and 17-1. In some modifications, the reinforcement member 75 may taper into a point as the reinforcement member 75 extends in the radial direction along the at least one of the first thread surface 71 and the second thread surface 72 toward the outer thread edge 74 (see FIG. 12-3), or to the outer thread edge 74 (see FIGS. 12-1 and 16-2). As long as the reinforcement member 75 is a protrusion that protrudes from the at least one of the first thread surface 71 and the second thread surface 72, the reinforcement member 75 may generate the spiral space. It is noted that the reinforcement member 75 may not extend across the crest line (R) (see FIG. 4) as the reinforcement member 75 extends away from the rod body 3 in the radial direction. A distal end of the reinforcement member 75 opposite to the rod body 3 as the reinforcement member 75 extends away from the rod body 3 in the radial direction may be located at any point on the at least one of the first thread surface 71 and the second thread surface 72 as shown in FIGS. 12-2 to 12-4, 14-2, 14-3, 15-2 to 15-4, 16-3 to 16-5, and 17-2 to 17-4.

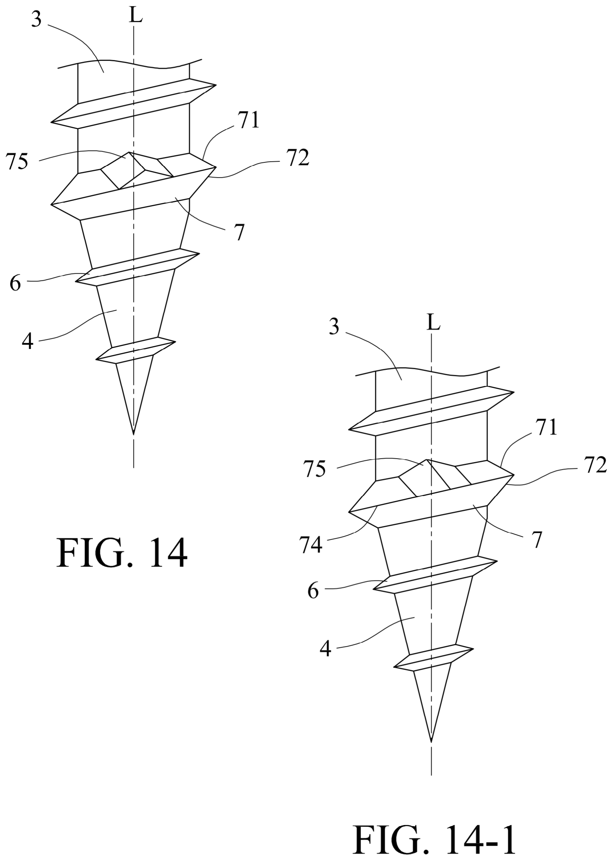

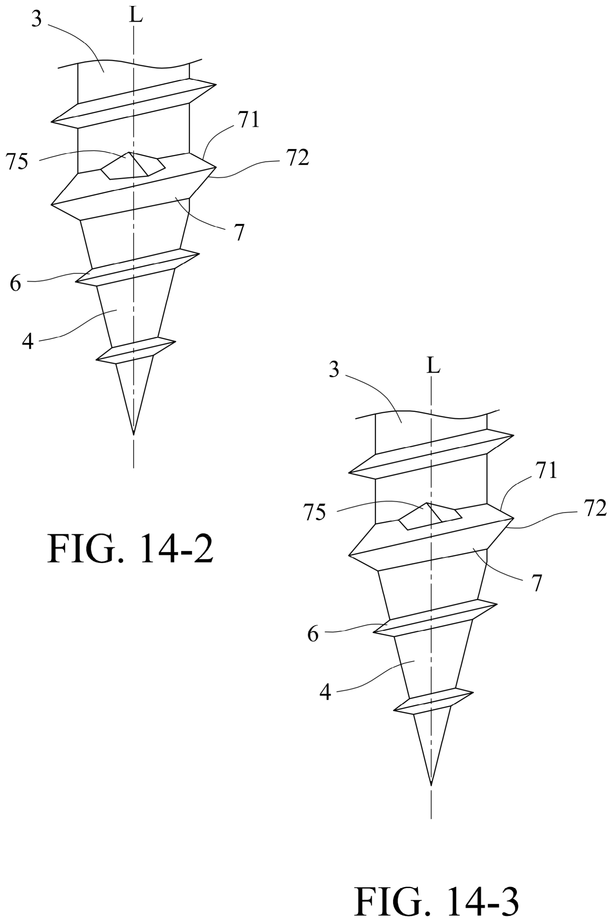

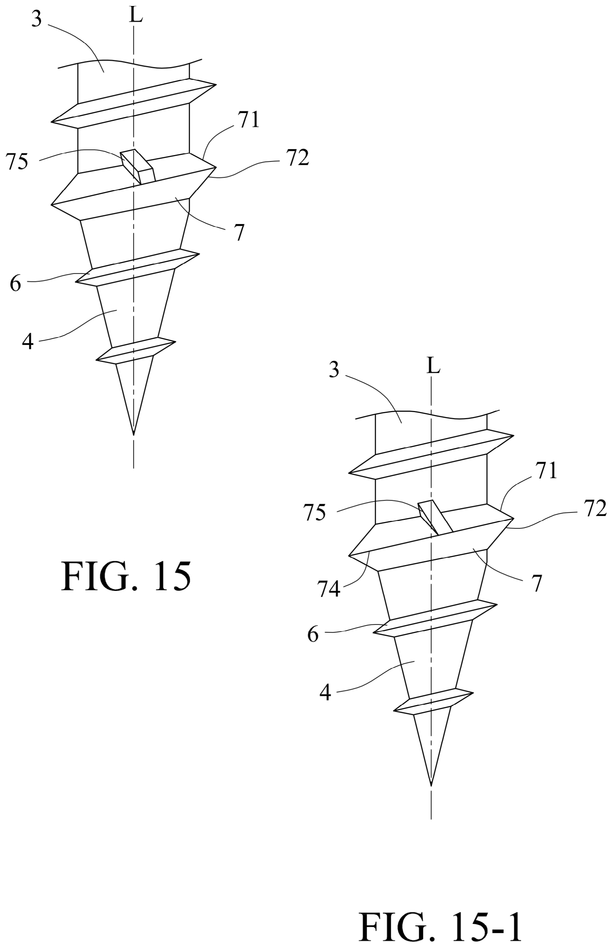

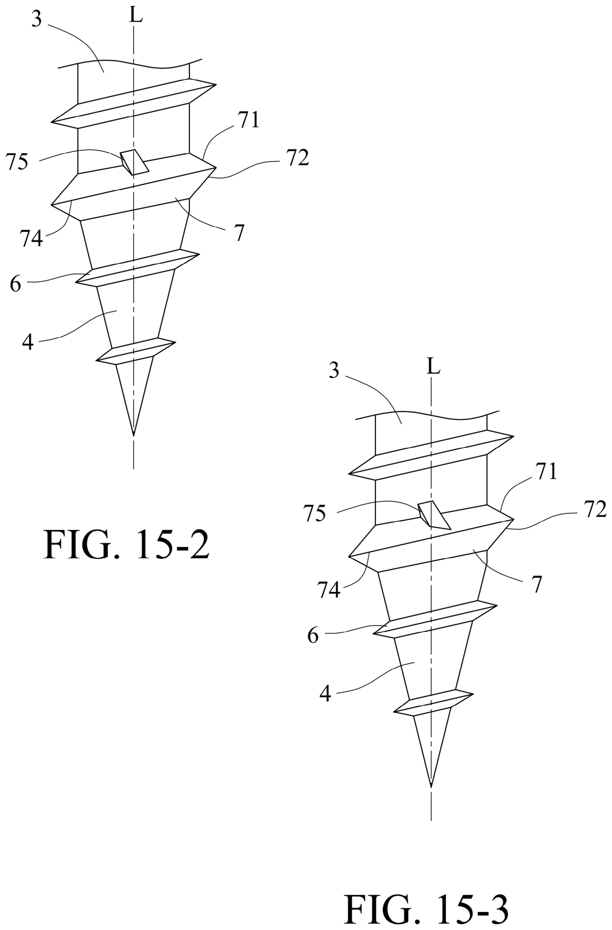

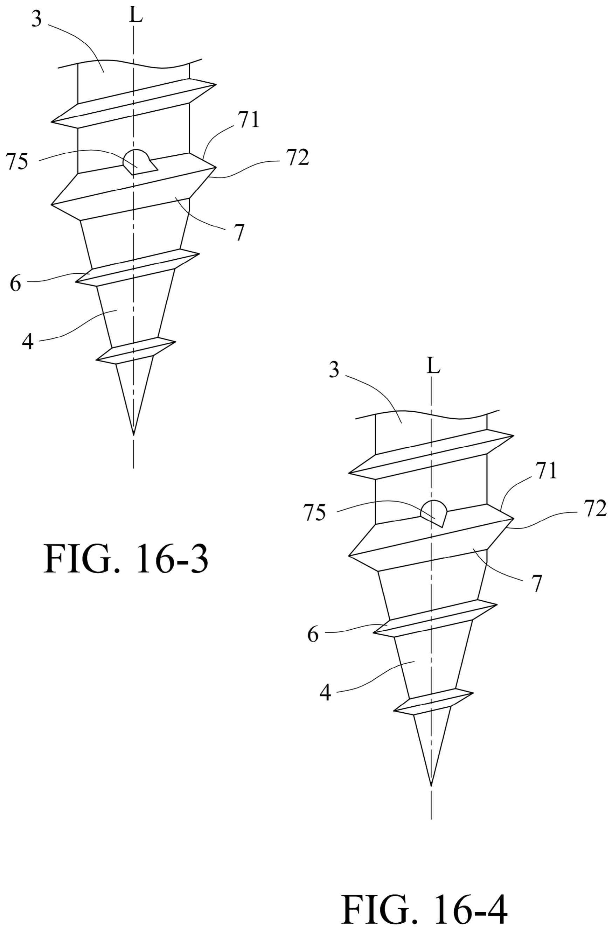

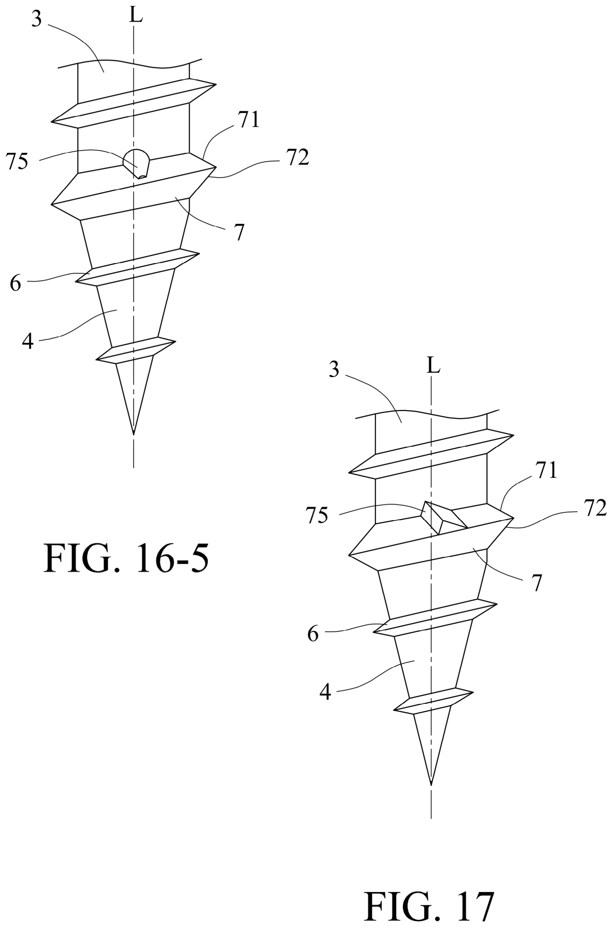

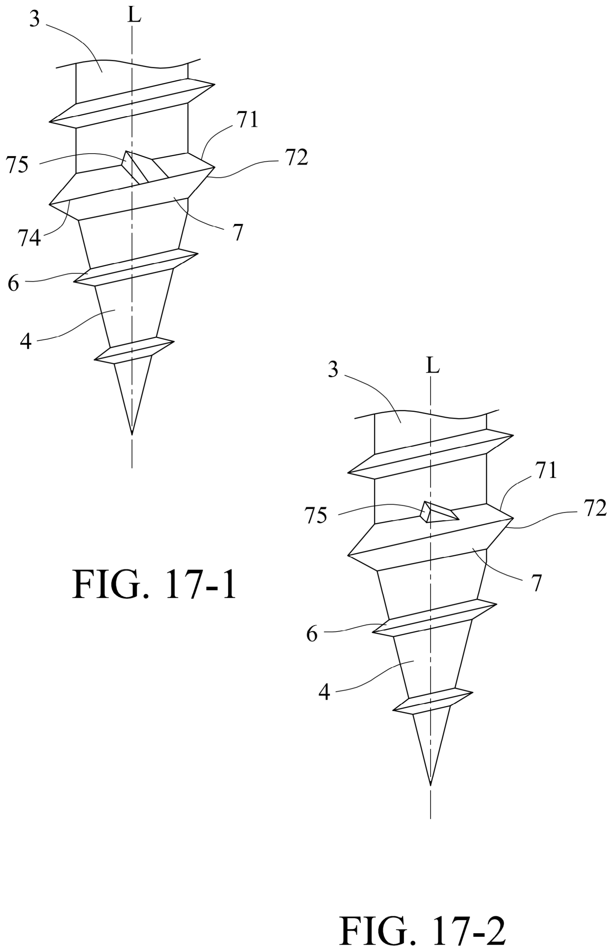

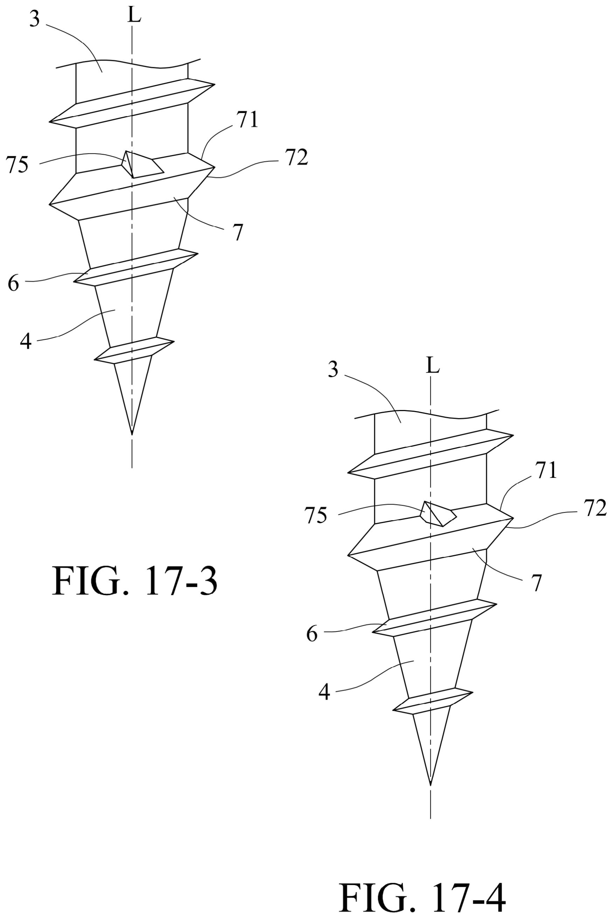

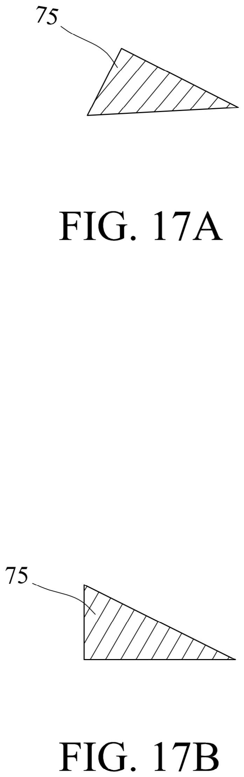

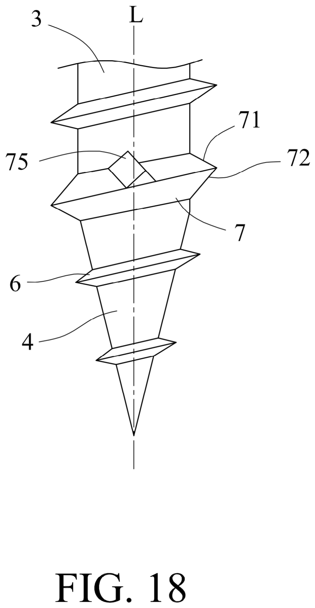

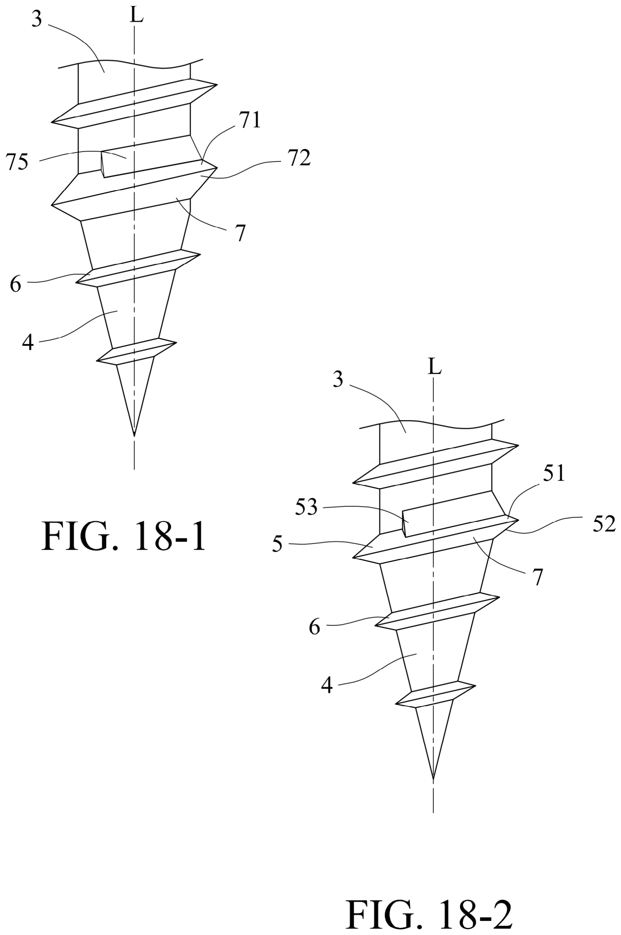

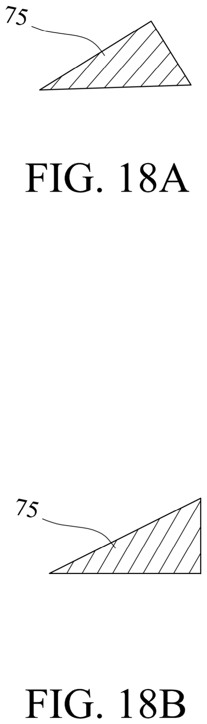

A cross section of the reinforcement member 75 may not be limited to be an isosceles triangle as shown in FIGS. 12 and 13. In some modifications as shown in FIGS. 14 and 14-1 to 14-3, the length of the reinforcement member 75 in the extending direction of the axis (L) may gradually increase and then gradually decrease as the reinforcement member 75 extends in a circumferential direction of the rod body 3 along the at least one of the first thread surface 71 and the second thread surface 72 such that the cross section of the reinforcement member 75 is a triangle, or has a curved shape. Therefore, the reinforcement member 75 may serve as a gentle slope that prevents a sudden increase in the resistance which the first embodiment encounters while being drilled into the object (T). In some modifications, the reinforcement member 75 may extend in the radial direction, and the cross section of the reinforcement member 75 may have a rectangular shape (see FIG. 15), a semi-elliptical or a semicircular shape (see FIG. 16), or other curved shapes (see FIGS. 16-1 to 16-4). Referring to FIGS. 17 and 18, the cross section of the reinforcement member 75 on an imaginary plane parallel to the axis (L) may not be an isosceles triangle (see FIGS. 17A, 17B, 18A, and 18B), and the shape of the cross section of the reinforcement member 75 may change as the reinforcement member 75 extends away from the rod body 3 in the radial direction. Such configurations of the reinforcement member 75 shown in FIGS. 17, 17-1 to 17-4, 17A, 17B, 18, 18A, and 18B may achieve similar effects (e.g., effect of cutting and effect of preventing a sudden increase in the resistance). In a practical use, the at least one buffer thread 7 may have better effects of cutting the fibers and discharging the dregs when the cross section of the reinforcement member 75 is a right triangle (see FIG. 17B) that has one side perpendicular to the at least one of the first thread surface 71 and the second thread surface 72. Briefly, the reinforcement member 75 is a protrusion that protrudes from the at least one of the first thread surface 71 and the second thread surface 72, and an extent of the reinforcement member 75 protruding from the at least one of the first thread surface 71 and the second thread surface 72 may be adjusted according to density of a material of the object (T) (e.g., density of a wooden plate). Because there are various types of trees that may be used to manufacture the wooden plate, descriptions of the extent of the reinforcement member 75 protruding from the at least one of the first thread surface 71 and the second thread surface 72, and descriptions of the material of the object (T) are omitted. The cross section of the reinforcement member 75 may differ according to different types of woods, and may not be limited to the shapes disclosed in the second embodiment and the modifications of the second embodiment.

It is noted that, in some modifications, the reinforcement member 75 may taper to a point as the reinforcement member 75 extends away from the rod body 3 in the radial direction along the at least one of the first thread surface 71 and the second thread surface 72 (see FIGS. 12-1, 12-3, 14-2, 15-3, 15-4, 16-2, and 16-4), or may taper to a smaller area as the reinforcement member 75 extends away from the rod body 3 in the radial direction along the at least one of the first thread surface 71 and the second thread surface 72 (see FIG. 16-5). In some modifications, a width of the reinforcement member 75 may widen as the reinforcement member 75 extends away from the rod body 3 in the radial direction along the at least one of the first thread surface 71 and the second thread surface 72. In some modifications, the width of the reinforcement member 75 may remain unchanged as the reinforcement member 75 extends away from the rod body 3 in the radial direction along the at least one of the first thread surface 71 and the second thread surface 72 (see FIGS. 14, 14-1, 15-1, 15-2, 16, 16-1, and 16-3).

It is noted that, in some modifications, the reinforcement member 75 may extend in the circumferential direction of the rod body 3 (see FIGS. 18-1 and 18-2), and may partially surrounds the axis (L) such that the reinforcement member 75 cooperates with the axis (L) to define a central angle which ranges from 36 degrees to 120 degrees, and which may be adjusted according to actual requirements. The configuration of the reinforcement member 75 may vary, as long as the reinforcement member 75 is a protrusion that may achieve the effect of reducing the resistance.

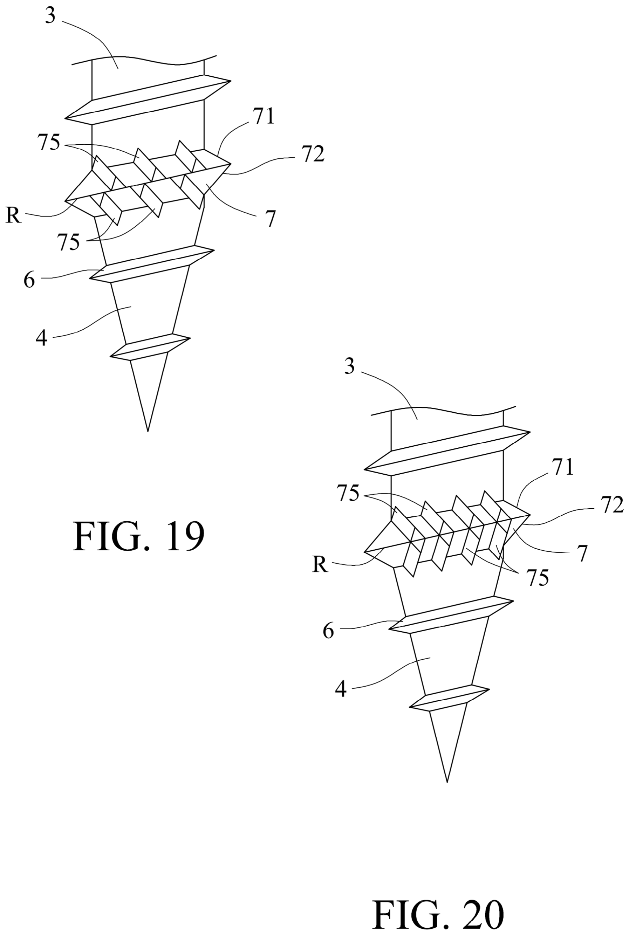

Referring to FIGS. 19 and 20, in other modifications of the second embodiment, the at least one reinforcement member 75 includes a plurality of reinforcement members 75 that protrude from the first thread surface 71 and the second thread surface 72. The reinforcement members 75 that are formed on the first thread surface 71 are spaced apart from each other, and the reinforcement members 75 that are formed on the second thread surface 72 are spaced apart from each other. A portion of the reinforcement members 75 that protrude from the first thread surface 71 and another portion of the reinforcement members 75 that protrude from the second thread surface 72 are arranged in an opposite arrangement or in an alternating arrangement along the crest line (R). Referring to FIG. 19, in the alternating arrangement, the reinforcement members 75 that are formed on the first thread surface 71 are not aligned with the reinforcement members 75 that are formed on the second thread surface 72 along the crest line (R). Referring to FIG. 20, in the opposite arrangement, the reinforcement members 75 that are formed on the first thread surface 71 are aligned with the reinforcement members 75 that are formed on the second thread surface 72 along the crest line (R) such that the reinforcement members 75 are substantially symmetrical along the crest line (R). The reinforcement members 75 may assist with cutting during the drilling process. A configuration of each of the reinforcement members 75 in the modifications shown in FIGS. 19 and 20 may be configured to be any one of the configurations of the reinforcement member 75 shown in FIGS. 12 to 18, 12-1 to 12-4, 14-1 to 14-3, 15-1 to 15-4, 16-1 to 16-5, 17-1 to 17-4, 18-1 to 18-2, 17A, 17B, 18A, and 18B. A number of the reinforcement members 75 on one of the first thread surface 71 and the second thread surface 72 ranges from 1 to 4 (i.e., a number of the reinforcement members 75 ranges from 2 to 8).

Given the manufacturing cost and the performance of the screw, a height of the reinforcement member 75 in the radial direction perpendicular to the extending direction of the axis (L) may be a quarter of a half of a difference between a major diameter of the at least one buffer thread 7, at which the reinforcement member 75 is located, and a minor diameter of the at least one buffer thread 7, at which the reinforcement member 75 is located, in the radial direction. Given the manufacturing cost and the pull-out strength of the screw, the height of the reinforcement member 75 in the radial direction perpendicular to the extending direction of the axis (L) may be one-sixth of a half of the difference between the major diameter of the at least one buffer thread 7, at which the reinforcement member 75 is located, and the minor diameter of the at least one buffer thread 7, at which the reinforcement member 75 is located, in the radial direction. Given drilling efficiency of the screw, the height of the reinforcement member 75 in the radial direction perpendicular to the extending direction of the axis (L) may range from a half of a half of the difference between the major diameter of the at least one buffer thread 7, at which the reinforcement member 75 is located, and the minor diameter of the at least one buffer thread 7, at which the reinforcement member 75 is located, in the radial direction, to a half of the difference between the major diameter of the at least one buffer thread 7 (i.e., the height of the reinforcement member 75 in the radial direction perpendicular to the extending direction of the axis (L) may be equal to a half of the difference between the major diameter and the minor diameter of the at least one buffer thread 7). Given the manufacturing cost of the screw, in order to achieve the cutting effect, the reinforcement member 75 may extend away from the rod body 3 in the radial direction along the at least one of the first thread surface 71 and the second thread surface 72, and cooperate with the axis (L) to define a central angle that is 2 degrees. However, the central angle may be 3 degrees, 8 degrees, 13 degrees, 36 degrees, or any degrees. The manufacturing of the screw may be cost-effective when the central angle ranges from 1 degree to 8 degrees. In one embodiment, the central angle may range from 1 degree to 15 degrees. The width of the reinforcement member 75 may narrow, widen, or remain unchanged as the reinforcement member 75 extends in the radial direction. In one embodiment, the length of the reinforcement member 75 in the extending direction of the axis (L) may be obtained by calculating a range of one-eighth to a quarter of the difference between the main thread angle (As) and the operation angle (Ar), and the height of the reinforcement member 75. In one embodiment, the length of the reinforcement member 75 in the extending direction of the axis (L) may range from one-tenth to three-fourths of a length, which is a number derived by subtracting the main thread angle (As) from the operation angle (Ar) and which is measured in millimeters as a unit thereof (e.g., by calculating the height of the reinforcement member 75 and the range of one-tenth to three-fourths of the difference between the main thread angle (As) and the operation angle (Ar), the range of the length of the reinforcement member 75 may be obtained). However, the length of the reinforcement member 75 may be adjusted according to hardness or density of a material of the reinforcement member 75. Dimensions of the reinforcement member 75 may thus not be limited to the range mentioned above, and detailed descriptions for the dimensions of the reinforcement member 75 are omitted for the sake of brevity.

It is noted that, the term "length" for the reinforcement member 75 refers to a length of one end of the reinforcement member 75 that is connected to or adjacent to the rod body 3, and that is measured from the at least one of the first thread surface 71 and the second thread surface 72 in the extending direction of the axis (L). The manufacturing of the screw may be cost-effective when the length of the reinforcement member 75 ranges from a tenth to one-fifth of a length of a portion of the main thread 5 in the extending direction of the axis (L) adjacent to the rod body 3 (i.e., from a tenth to one-fifth of a distance between the junction line (S1) and the junction line (S2) (see FIG. 4)). The screw may have a better performance when the length of the reinforcement member 75 ranges from one-fifth to a half of the length of the portion of the main thread 5 in the extending direction of the axis (L) adjacent to the rod body 3 (i.e., from one-fifth to a half of the distance between the junction line (S1) and the junction line (S2)). However, the length of the reinforcement member 75 may be adjusted according to hardness or density of a material of the reinforcement member 75, or according to thickness of the reinforcement member 75. The dimensions of the reinforcement member 75 may thus not be limited to the range mentioned above, and detailed descriptions for the dimensions of the reinforcement member 75 are omitted for the sake of brevity.

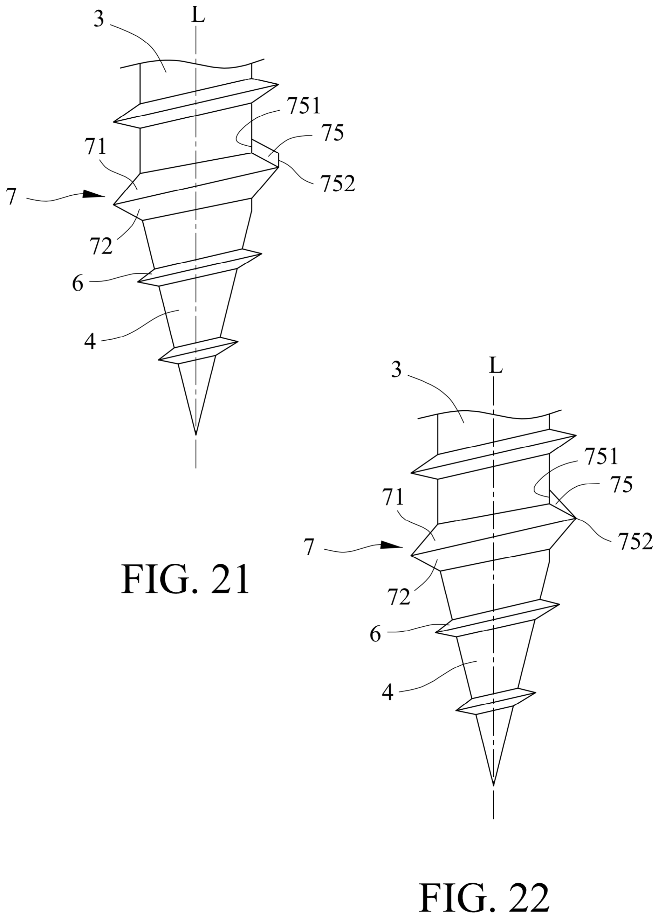

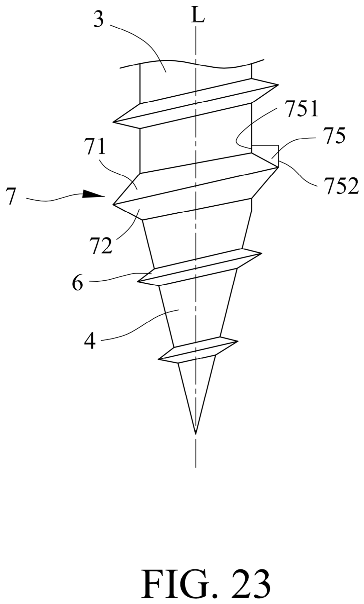

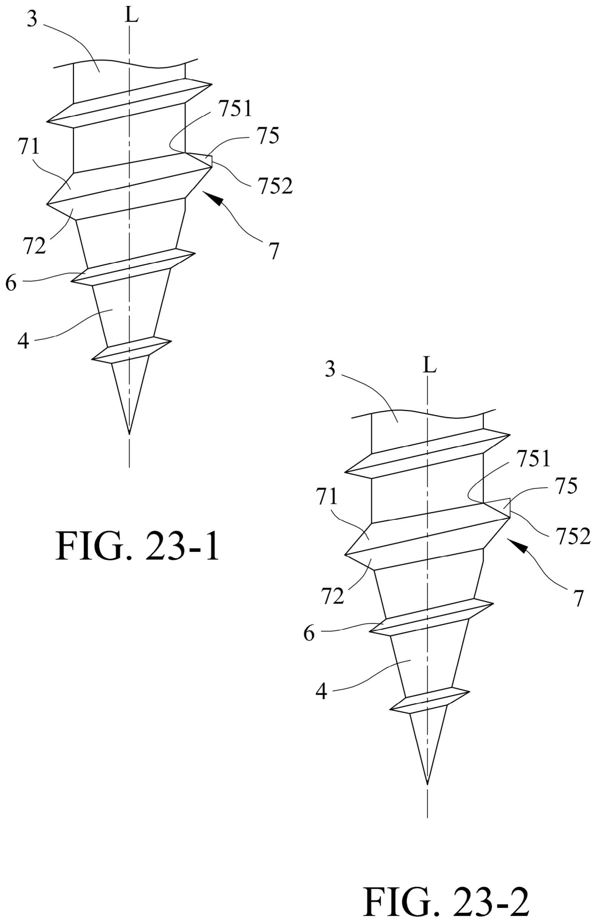

Referring to FIGS. 21 to 23, in other modifications of the second embodiment, the reinforcement member 75 has an inner end 751 that is proximate to and connected to the rod body 3, and an outer end 752 that is distal to the rod body 3. A length of the inner end 751 of the reinforcement member 75 in the extending direction of the axis (L) may be equal to a length of the outer end 752 of the reinforcement member 75 in the extending direction of the axis (L) as shown in FIG. 21, may be greater than the length of the outer end 752 in the extending direction of the axis (L) as shown in FIG. 22, or may be shorter than the length of the outer end 752 in the extending direction of the axis (L) as shown in FIGS. 23, 23-1, and 23-2. All of the configurations of the reinforcement member 75 shown in FIGS. 21 to 23, 23-1, and 23-2 may improve the cutting performance of the at least one buffer thread 7. When the length of the inner end 751 is greater than the length of the outer end 752, the manufacturing cost for the screw may be minimized, and the screw may be efficiently manufactured, which saves cost of materials and renders the screw eco-friendly. It is noted that the term "length" for the inner end 751 and the outer end 752 is measured from a junction between the reinforcement member 75 and the at least one of the first thread surface 71 and the second thread surface 72. It is noted that, the reinforcement member 75 may be directly connected to the rod body 3 as shown in the FIGS. 21 to 23. However, in one embodiment, the reinforcement member 75 may be spaced apart from the rod body 3. The relationship between the rod body 3 and the reinforcement member 75 may not be limited thereto.

In one embodiment, the outer end 752 of the reinforcement member 75 coincides with the outer thread edge 74 of the at least one buffer thread 7, at which the reinforcement member 75 is located. In one embodiment, the outer end 752 of the reinforcement member 75 is spaced apart from the outer thread edge 74 of the at least one buffer thread 7, at which the reinforcement member 75 is located.

When the at least one buffer thread 7 includes a plurality of reinforcement members 75, the reinforcement members 75 may have the same configuration, or may have different configurations. For example, some of the reinforcement members 75 may respectively have the configurations that are shown in FIGS. 21 to 23, 23-1, and 23-2. By virtue of the reinforcement members 75 having different configurations, the screw may have a better performance during the drilling process. The reinforcement member 75, which is the main feature that distinguishes the second embodiment from the first embodiment, may reduce the pressure and friction that the object (T) (see FIG. 6) applies to thread surfaces (e.g., the upper thread surface 51, the second thread surface 72, etc.) and a portion of the rod body 3.

It is noted that, in some modifications of the second embodiment, according to requirements for improving the cutting effect or for the expansion of a drilled hole, the screw may have the cutting edge 8 or the ribs 9 as shown in FIGS. 8 to 11 and 8-1 to 8-4.

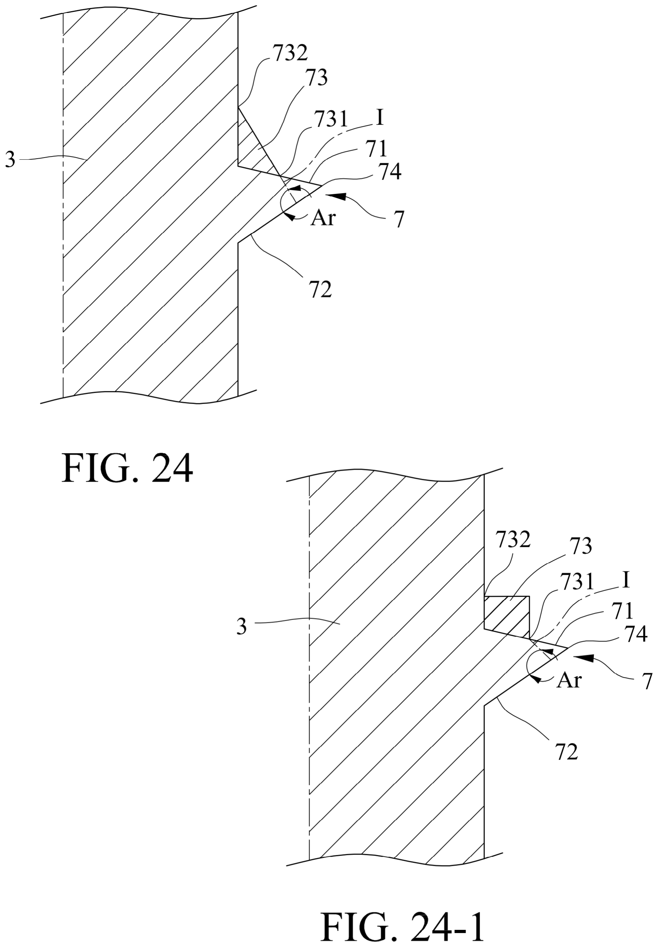

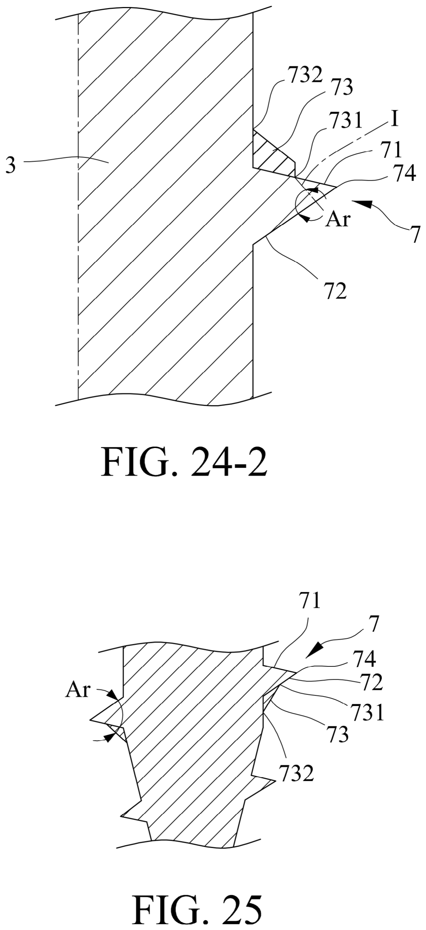

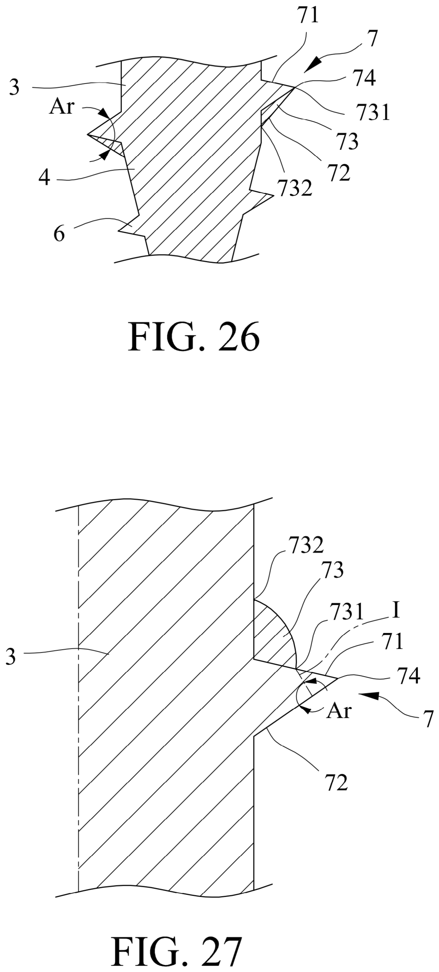

Referring to FIGS. 24 to 26, 24-1, and 24-2, in a third embodiment of the screw according to the present disclosure, the at least one buffer thread 7 further has at least one protrusion portion 73. Specifically, one of the first thread surface 71 and the second thread surface 72 of the at least one buffer thread 7 has the at least one protrusion portion 73, and a surface of the at least one protrusion portion 73 may serve as at least a portion of the one of the first thread surface 71 and the second thread surface 72. The at least one protrusion portion 73 of the one of the first thread surface 71 and the second thread surface 72 has an outer end 731 that is distal to the rod body 3, and an inner end 732 that is opposite to the outer end 731, and that is proximate to and connected to the rod body 3. Referring to FIGS. 24, 24-1, 24-2, and 25, in some modifications of the third embodiment, the outer end 731 of the at least one protrusion portion 73 of the at least one buffer thread 7 is spaced apart from the outer thread edge 74 of the at least one buffer thread 7. Referring to FIG. 26, in one modification of the third embodiment, the outer end 731 of the at least one protrusion portion 73 of the at least one buffer thread 7 coincides with the outer thread edge 74 of the at least one buffer thread 7. Referring to FIGS. 24, 24-1, and 24-2, in some modifications of the third embodiment, the outer end 731 and the inner end 732 cooperatively define an imaginary plane (I) that extends therethrough, and that cooperates with the second thread surface 72 to define the operation angle (Ar).

Referring to FIGS. 24 and 25, in some modifications of the third embodiment, because the outer end 731 of the at least one protrusion portion 73 does not extend to the outer thread edge 74, a volume of the at least one protrusion portion 73 may be nearly half of a volume of the at least one protrusion portion 73 of another modification of the third embodiment shown in FIG. 26. Consequently, the modifications shown in FIGS. 24 and 25 may be more cost-effective to manufacture than the modification shown in FIG. 26, and may be labor-saving and achieve the effect of reducing the resistance.

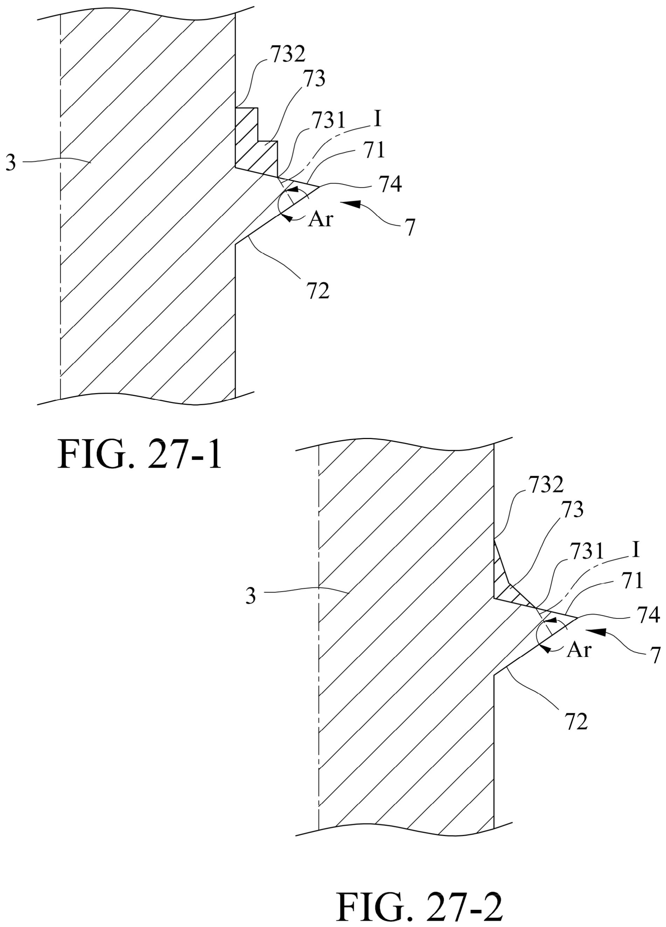

Referring to FIGS. 27, 27-1, and 27-2, in some modifications of the third embodiment, the at least one protrusion portion 73 may not extend to the outer thread edge 74, and may have a cross section that is not triangular. The cross section of the at least one protrusion portion 73 may not be limited to be a triangle as shown in FIGS. 24 to 26, and a configuration of the at least one protrusion portion 73 may be adjusted according to actual requirements as long as the at least one protrusion portion 73 may achieve the above-mentioned effects. In some embodiments, the configuration of the at least one protrusion portion 73 may be the same, or similar to the configuration of the at least one reinforcement member 75 that is shown in FIGS. 12-3, 14-2, 14-3, 15-2 to 15-4, 16-3 to 16-5, and 17-2 to 17-4, but may not be limited thereto. In addition, it may be more preferable when a number of the at least one protrusion portion 73 ranges from 2 to 6 (i.e., when there are two to six protrusion portions 73 formed on the one of the first thread surface 71 and the second thread surface 72).

Given the manufacturing cost and the performance of the screw, a height of the at least one protrusion portion 73 of the at least one buffer thread 7 in the radial direction perpendicular to the extending direction of the axis (L) may be a half of a half of a difference between a major diameter of the at least one buffer thread 7, at which the at least one protrusion portion 73 is located, and a minor diameter of the at least one buffer thread 7, at which the at least one protrusion portion 73 is located, in the radial direction. Given the manufacturing cost and the pull-out strength of the screw, the height of the at least one protrusion portion 73 in the radial direction perpendicular to the extending direction of the axis (L) may be a quarter of a half of the difference between the major diameter of the at least one buffer thread 7, at which the at least one protrusion portion 73 is located, and the minor diameter of the at least one buffer thread 7, at which the at least one protrusion portion 73 is located, in the radial direction. Given drilling efficiency of the screw, the height of the at least one protrusion portion 73 in the radial direction perpendicular to the extending direction of the axis (L) may be two-thirds of a half of the difference between the major diameter of the at least one buffer thread 7, at which the at least one protrusion portion 73 is located, and the minor diameter of the at least one buffer thread 7, at which the at least one protrusion portion 73 is located, in the radial direction. In one embodiment, the height of the at least one protrusion portion 73 of the at least one buffer thread 7 in the radial direction perpendicular to the extending direction of the axis (L) may be equal to a half of the difference between the major diameter of the at least one buffer thread 7 and the minor diameter of the at least one buffer thread 7 in the radial direction. Given the manufacturing cost of the screw, in order to achieve the cutting effect, the at least one protrusion portion 73 may extend away from the rod body 3 in the radial direction along the one of the first thread surface 71 and the second thread surface 72, and cooperate with the axis (L) to define a central angle that is 2 degrees. However, the central angle may be 3 degrees, 7 degrees, 10 degrees, or any degrees. The manufacturing of the screw may be cost-effective when the central angle ranges from 2 degree to 11 degrees. A width of the at least one protrusion portion 73 may narrow, widen, or remain unchanged as the at least one protrusion portion 73 extends in the radial direction. In one embodiment, a length of the at least one protrusion portion 73 in the extending direction of the axis (L) may be obtained by calculating a range of one-eighth to a half of the difference between the main thread angle (As) and the operation angle (Ar), and the height of the at least one protrusion portion 73. In one embodiment, the length of the at least one protrusion portion 73 in the extending direction of the axis (L) may range from one-eighth to a half of a length, which is a number derived by subtracting the main thread angle (As) from the operation angle (Ar) and which is measured in millimeters as a unit thereof (e.g., by calculating the height of the at least one protrusion portion 73 and the range of one-eighth to a half of the difference between the main thread angle (As) and the operation angle (Ar), the range of the length of the at least one protrusion portion 73 may be obtained). However, the length of the at least one protrusion portion 73 may be adjusted according to hardness or density of a material of the at least one protrusion portion 73. Dimensions of the at least one protrusion portion 73 may thus not be limited to the range mentioned above, and detailed descriptions for the dimensions of the at least one protrusion portion 73 are omitted for the sake of brevity.

It is noted that, the term "length" for the at least one protrusion portion 73 refers to a length of one end of the at least one protrusion portion 73 that is connected to or adjacent to the rod body 3, and that is measured from the one of the first thread surface 71 and the second thread surface 72 in the extending direction of the axis (L). The manufacturing of the screw may be cost-effective when the length of the at least one protrusion portion 73 ranges from one-ninth to a quarter of the length of the portion of the main thread 5 in the extending direction of the axis (L) adjacent to the rod body 3 (i.e., from one-ninth to a quarter of the distance between the junction line (S1) and the junction line (S2) (see FIG. 4)). The screw may have a better performance when the length of the at least one protrusion portion 73 ranges from one-third to three-fifths of the length of the portion of the main thread 5 in the extending direction of the axis (L) adjacent to the rod body 3 (i.e., from one-third to three-fifths of the distance between the junction line (S1) and the junction line (S2)). In one embodiment, the length of the at least one protrusion portion 73 may range from a quarter to three-fifths of the length of the portion of the main thread 5 in the extending direction of the axis (L) adjacent to the rod body 3. However, the length of the at least one protrusion portion 73 may be adjusted according to hardness or density of a material of the at least one protrusion portion 73, or according to thickness of the at least one protrusion portion 73. The dimensions of the at least one protrusion portion 73 may thus not be limited to the range mentioned above, and detailed descriptions for the dimensions of the at least one protrusion portion 73 are omitted for the sake of brevity.

In one embodiment, a length of the inner end 732 of the at least one protrusion portion 73 in the extending direction of the axis (L) is no smaller than a length of the outer end 731 of the at least one protrusion portion 73 in the extending direction of the axis (L). It is noted that the term "length" for the inner end 732 and the outer end 731 is measured from a junction between the at least one protrusion portion 73 and the one of the first thread surface 71 and the second thread surface 72.

It is noted that, in each of the modifications of the third embodiment as shown in FIGS. 24 to 26, 24-1, 24-2, according to requirements for improving the cutting effect or for the expansion of a drilled hole, the screw may have the cutting edge 8 or the ribs 9 as shown in FIGS. 8 to 11 and 8-1 to 8-4, and other sections of the screw may have configurations like other modifications/embodiments shown in FIGS. 12-3, 12-4, 14-3, 14-4, 15-2 to 15-4, 16-3 to 16-5, 17-2 to 17-4, 18-1, and 18-2.

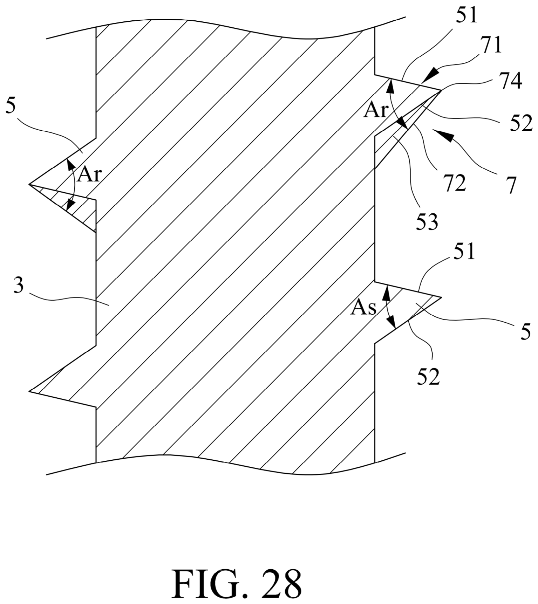

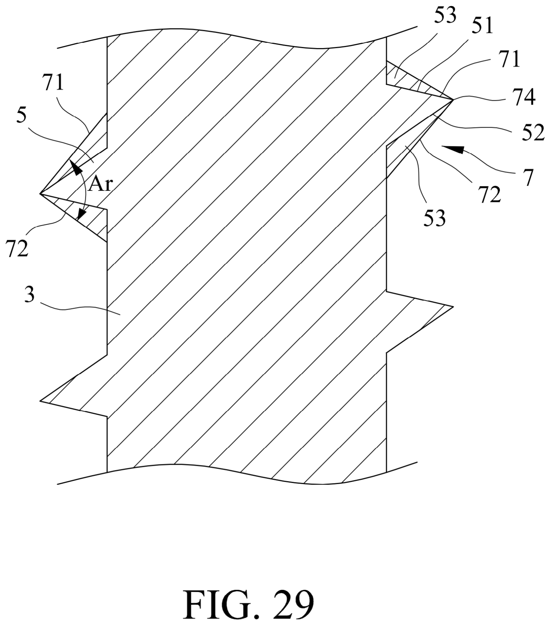

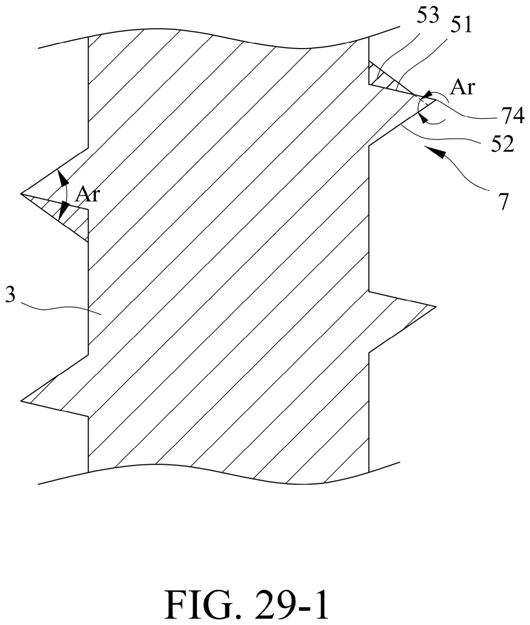

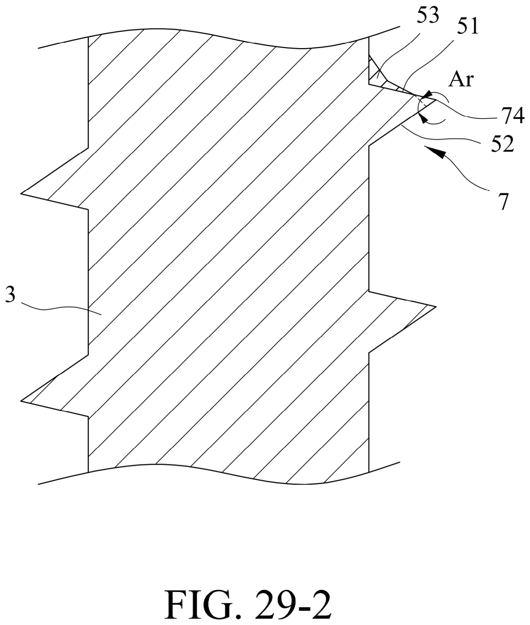

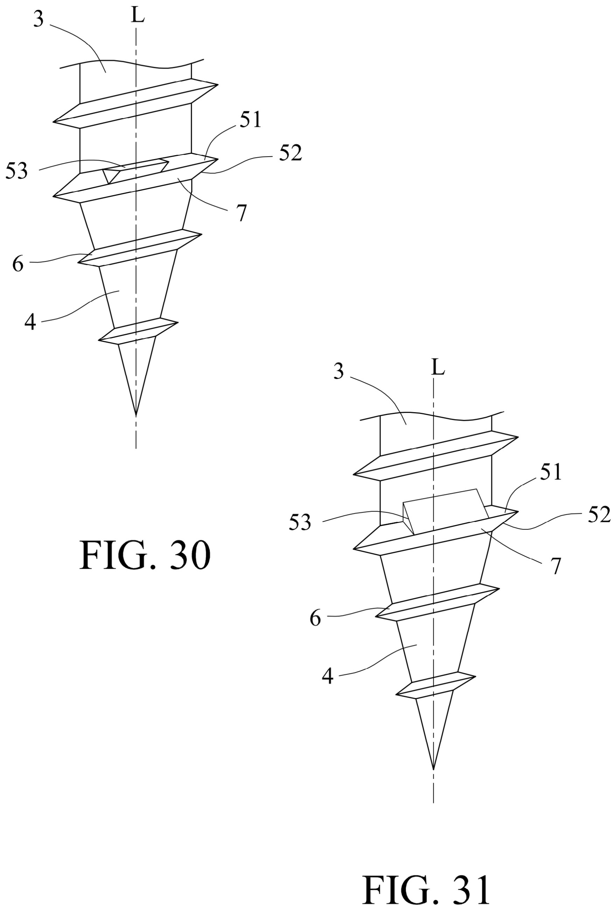

Referring to FIGS. 28 to 32, 29-1, and 29-2, a fourth embodiment of the screw according to the present disclosure differs from the first embodiment in a structural design of the main thread 5. In the fourth embodiment, the main thread 5 further has at least one buffer portion 53 that is formed on at least one section of one of the upper thread surface 51 and the lower thread surface 52. At least one section of the main thread 5 that has the at least one buffer portion 53 is defined as the at least one buffer thread 7. That is to say, the at least one buffer thread 7 of the fourth embodiment is formed by forming the at least one buffer portion 53 on the at least one section of the main thread 5. The at least one buffer thread 7 of the fourth embodiment may still achieve the effect of reducing the resistance during the drilling process. When the main thread 5 of the fourth embodiment has a plurality of buffer portions 53 that are formed on a plurality of sections of one of the upper thread surface 51 and the lower thread surface 52, and when the buffer portions 53 are directly connected (i.e., the sections of the one of the upper thread surface 51 and the lower thread surface 52 are directly connected) and helically extend, sections of the main thread 5 that have the directly connected buffer portions 53 may correspond to the at least one buffer thread 7 of the first embodiment. In one modification of the fourth embodiment, the buffer portions 53 may not be directly connected (i.e., may not extend continuously) to cooperatively serve as one buffer thread 7. In one modification of the fourth embodiment, the buffer portions 53 may be divided into groups that are not directly connected, while the buffer portions 53 in each of the groups are directly connected. In one modification of the fourth embodiment, the buffer portions 53 may only have one group in which the buffer portions 53 are directly connected. In one modification of the fourth embodiment, the main thread 5 may only have a single buffer portion 53. In some modifications of the fourth embodiment as shown in FIGS. 30 to 32, the at least one buffer portion 53 of the main thread 5 may extend in the circumferential direction of the rod body 3 on the one of the upper thread surface 51 and the lower thread surface 52 and partially surround the axis (L). In each of the modifications of the fourth embodiment, according to requirements for improving the cutting effect or for the expansion of a drilled hole, the screw may have the cutting edge 8 or the ribs 9 as shown in FIGS. 8 to 11 and 8-1 to 8-4, and other sections of the screw may have configurations like other modifications/embodiments shown in FIGS. 12-3, 12-4, 14-3, 14-4, 15-2 to 15-4, 16-3 to 16-5, 17-2 to 17-4, 18-1, and 18-2. In one modification, if the main thread 5 continuously extends from the tip tail 4 (e.g., the main thread 5 helically extends around the tip tail 4), the at least one buffer portion 53 may be formed on the tip tail 4. It may be more preferable when a number of the at least one buffer portion 53 that are formed on the one of the upper thread surface 51 and the lower thread surface 52 ranges from 3 to 8. In one modification, a length of the at least one buffer portion 53 of the al least one section of the main thread 5 in the extending direction of the axis (L) may be a tenth, one-fifth, one-third, or a half of a pitch of the main thread 5.

In one embodiment, the main thread 5 may have a plurality of buffer portions 53 that are formed on the upper thread surface 51 and the lower thread surface 52. A portion of the buffer portions 53 that formed on the upper thread surface 51 and another portion of the buffer portions 53 that are formed on the lower thread surface 52 are arranged in an opposite arrangement or in an alternating arrangement along the crest line (S). In the alternating arrangement, the buffer portions 53 that are formed on the upper thread surface 51 are not aligned with the buffer portions 53 that are formed on the lower thread surface 52 along the crest line (S). In the opposite arrangement, the buffer portions 53 that are formed on the upper thread surface 51 are aligned with the buffer portions 53 that are formed on the lower thread surface 52 along the crest line (S) such that the buffer portions 53 are substantially symmetrical along the crest line (S).

Given the manufacturing cost and the performance of the screw, a height of the at least one buffer portion 53 of the at least one section of the main thread 5 in the radial direction perpendicular to the extending direction of the axis (L) may be two-thirds of a half of a difference between a major diameter of another section of the main thread 5 without the at least one buffer portion 53, and a minor diameter of the another section of the main thread 5 without the at least one buffer portion 53 in the radial direction. Given the pull-out strength of the screw, the height of the at least one buffer portion 53 of the at least one section of the main thread 5 in the radial direction perpendicular to the extending direction of the axis (L) may range from one-third to a half of a half of the difference between the major diameter of the another section of the main thread 5 without the at least one buffer portion 53, and the minor diameter of the another section of the main thread 5 without the at least one buffer portion 53 in the radial direction. Given drilling efficiency of the screw, the height of the at least one buffer portion 53 of the at least one section of the main thread 5 in the radial direction perpendicular to the extending direction of the axis (L) may be equal to a half of the difference between the major diameter of the another section of the main thread 5 without the at least one buffer portion 53, and the minor diameter of the another section of the main thread 5 without the at least one buffer portion 53 in the radial direction. In one embodiment, the height of the at least one buffer portion 53 of the at least one section of the main thread 5 in the radial direction perpendicular to the extending direction of the axis (L) may be one-sixth, or a quarter of a half of the difference between the major diameter of the another section of the main thread 5 without the at least one buffer portion 53, and the minor diameter of the another section of the main thread 5 without the at least one buffer portion 53 in the radial direction. In one embodiment, a height of the at least one section of the main thread 5 that has the at least one buffer portion 53 in the radial direction perpendicular to the extending direction of the axis (L) is no greater than a height of the another section of the main thread 5 without the at least one buffer portion 53 in the radial direction. Given the manufacturing cost of the screw, in order to achieve the cutting effect, the at least one buffer portion 53 may extend away from the rod body 3 in the radial direction along the at least one section of the one of the upper thread surface 51 and the lower thread surface 52, and cooperate with the axis (L) to define a central angle that is 2 degrees. However, the central angle may be 3 degrees, 7 degrees, 16 degrees, 23 degrees, or any degrees. The manufacturing of the screw may be cost-effective when the central angle ranges from 3 degree to 23 degrees. In one embodiment, the at least one buffer portion 53 of the main thread 5 may extend in the circumferential direction of the rod body 3, and partially surround the axis (L) such that the at least one buffer portion 53 of the main thread 5 cooperates with the axis (L) to define the central angle which ranges from 36 degrees to 180 degrees. A width of the at least one buffer portion 53 may narrow, widen, or remain unchanged as the at least one buffer portion 53 extends in the radial direction. In one embodiment, the length of the at least one buffer portion 53 in the extending direction of the axis (L) may be obtained by calculating a range of one-fifth to a half of the difference between the main thread angle (As) and the operation angle (Ar), and the height of the at least one buffer portion 53. However, the length of the at least one buffer portion 53 may be adjusted according to hardness or density of a material of the at least one buffer portion 53. Dimensions of the at least one buffer portion 53 may thus not be limited to the range mentioned above, and detailed descriptions for the dimensions of the at least one buffer portion 53 are omitted for the sake of brevity, and other sections of the screw may have configurations like other modifications/embodiments shown in FIGS. 12-3, 12-4, 14-3, 14-4, 15-2 to 15-4, 16-3 to 16-5, 17-2 to 17-4, 18-1, and 18-2.

It is noted that, the term "length" for the at least one buffer portion 53 refers to a length of one end of the at least one buffer portion 53 that is connected to or adjacent to the rod body 3, and that is measured from the one of the upper thread surface 51 and the lower thread surface 52 in the extending direction of the axis (L). The manufacturing of the screw may be cost-effective when the length of the at least one buffer portion 53 of the at least one section of the main thread 5 in the extending direction of the axis (L) ranges from one-eighth to one-third of a length of the another portion of the main thread 5 that is without the at least one buffer portion 53, that is adjacent to the rod body 3, and that is measured in the extending direction of the axis (L) (i.e., from one-eighth to one-third of the distance between the junction line (S1) and the junction line (S2) (see FIG. 4)). The screw may have a better performance when the length of the at least one buffer portion 53 of the at least one section of the main thread 5 in the extending direction of the axis (L) ranges from a half to four-fifths of the length of the another portion of the main thread 5 that is without the at least one buffer portion 53, that is adjacent to the rod body 3, and that is measured in the extending direction of the axis (L) (i.e., from a half to four-fifths of the distance between the junction line (S1) and the junction line (S2)). In one embodiment, the length of the at least one buffer portion 53 of the at least one section of the main thread 5 in the extending direction of the axis (L) may range from one-ninth to three-fifths of the length of the another portion of the main thread 5 that is without the at least one buffer portion 53, that is adjacent to the rod body 3, and that is measured in the extending direction of the axis (L). However, the length of the at least one buffer portion 53 may be adjusted according to hardness or density of a material of the at least one buffer portion 53, or according to thickness of the at least one buffer portion 53. The dimensions of the at least one buffer portion 53 may thus not be limited to the range mentioned above, and detailed descriptions for the dimensions of the at least one buffer portion 53 are omitted for the sake of brevity.

The at least one buffer portion 53 of the at least one section of the main thread 5 has an outer end that is distal to the rod body 3, and an inner end that is opposite to the outer end, and that is proximate to and connected to the rod body 3. In one embodiment, a length of the inner end of the at least one buffer portion 53 of the at least one section of the main thread 5 in the extending direction of the axis (L) is no smaller than a length of the outer end of the at least one buffer portion 53 of the at least one section of the main thread 5 in the extending direction of the axis (L). The outer end of the at least one buffer portion 53 of the at least one section of the main thread 5 coincides with the outer thread edge 74 of the at least one buffer thread 7, or is spaced apart from the outer thread edge 74 of the at least one buffer thread 7.

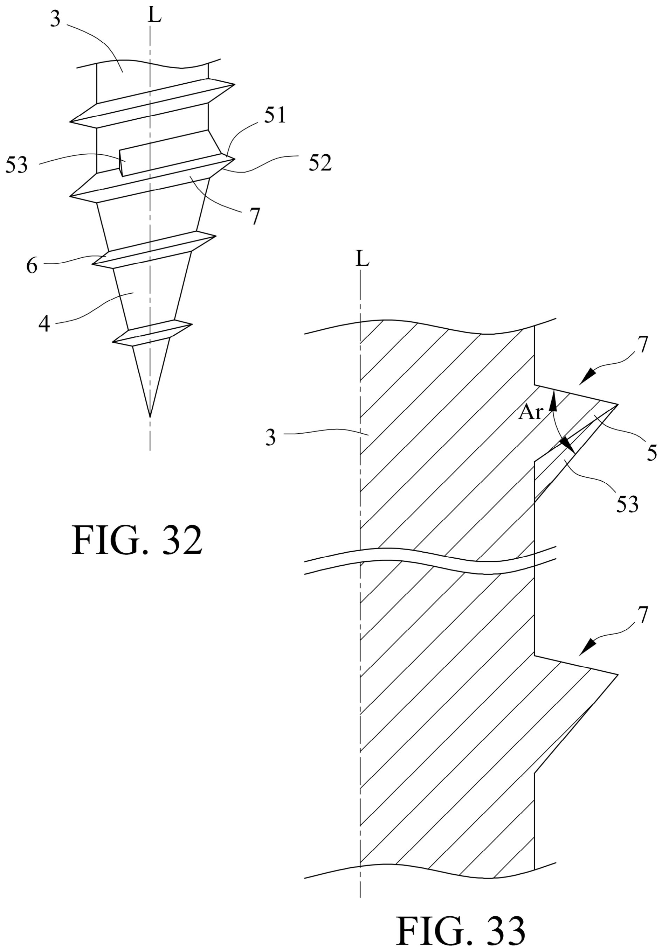

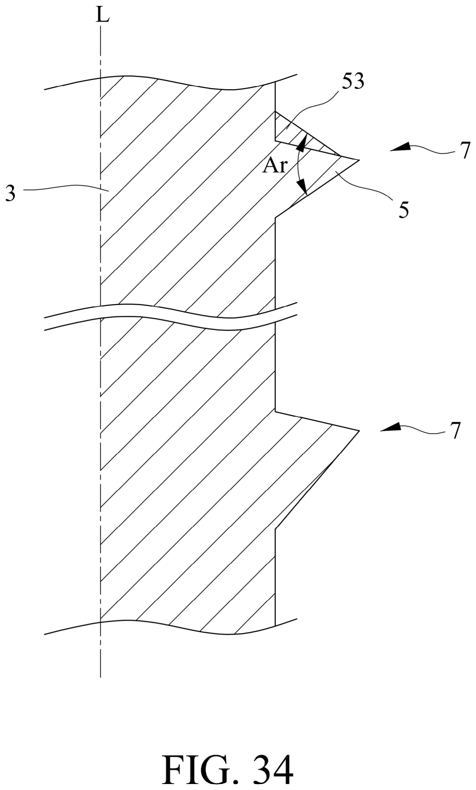

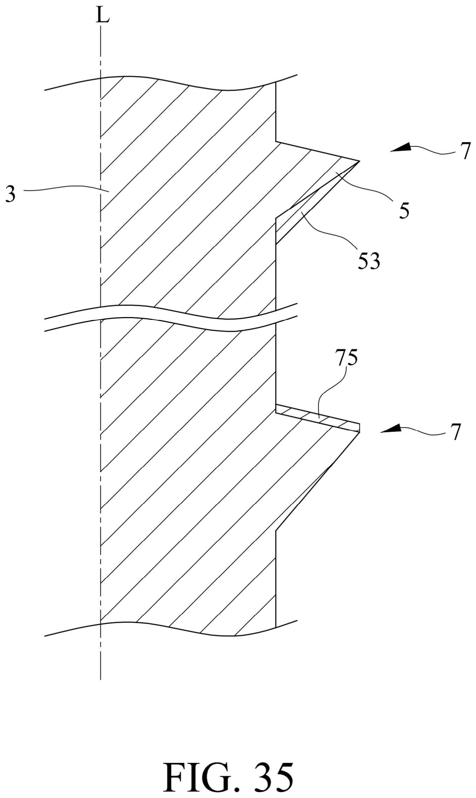

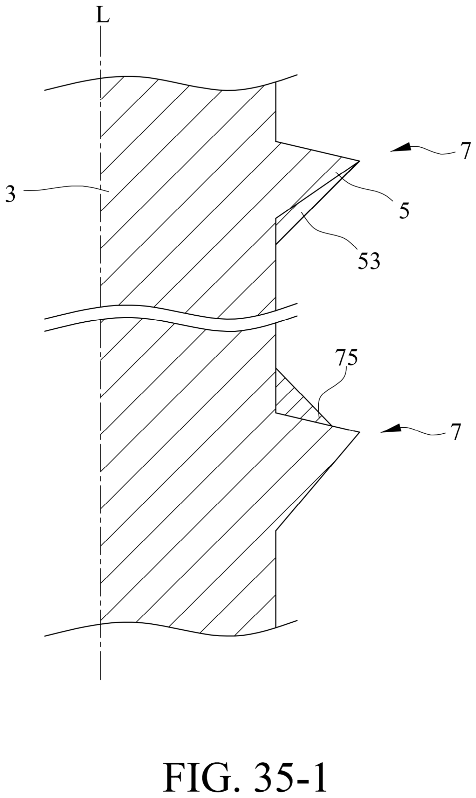

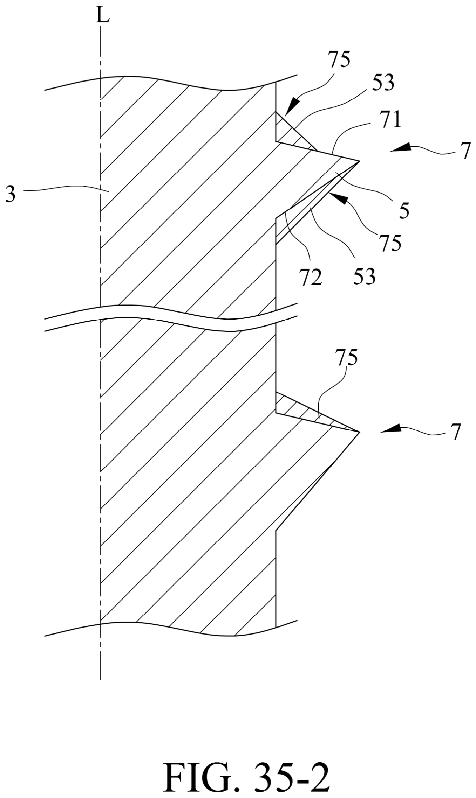

Referring to FIGS. 33 and 34, a fifth embodiment of the screw according to the present disclosure includes the at least one buffer thread 7 while the main thread 5 thereof has the at least one buffer portion 53, which is also shown in the fourth embodiment of the screw, to serve as another buffer thread 7. That is to say, the at least one buffer thread 7 shown in any one of the first embodiment, the second embodiment, and the third embodiment, and the at least one section of the main thread 5 that has the at least one buffer portion 53 to serve as another buffer thread 7 as shown in the fourth embodiment, may be combined in the same screw. In addition, in some modifications of the fifth embodiment as shown in FIGS. 35, 35-1, and 35-2, any one of the at least one buffer thread 7 and the another buffer thread 7 (i.e., the at least one section of the main thread 5 that has the at least one buffer portion 53) may include the at least one reinforcement member 75 so that the pressures from the object (T) (see FIG. 6) and the resistance may be reduced by the at least one reinforcement member 75. It is noted that, in the modifications/embodiments as shown in FIGS. 12-1, 14-1, 15-1, 16-1, 16-2, and 17-1, the main thread 5 may have the at least one buffer portion 53 to serve as another buffer thread 7 as well.

In each of the modifications/embodiments of the screw, even though the number of each of the at least one reinforcement member 75, the at least one protrusion portion 73, and the at least one buffer portion 53 generally ranges from 1 to 8, the number is adjustable according to actual requirements. In addition, each of the at least one reinforcement member 75, the at least one protrusion portion 73, and the at least one buffer portion 53 may be disposed only on the first thread surface 71, only on the second thread surface 72, or on both of the first thread surface 71 and the second thread surface 72. When the object (T) is made of wood, according to the species of tree that serves as a wooden material, moisture content of the object (T), and types of the wood (e.g., hardwood and softwood), the number of each of the at least one reinforcement member 75, the at least one protrusion portion 73, and the at least one buffer portion 53 may be increased (e.g., more than 8) or reduced (e.g., less than 2), thereby achieving a balance between improving the cutting effect and lowering the manufacturing cost. Specifically, in order to achieve desired effects, the number of each of the at least one reinforcement member 75, the at least one protrusion portion 73, and the at least one buffer portion 53 when the object (T) is made of hardwood may be less than the number of each of the at least one reinforcement member 75, the at least one protrusion portion 73, and the at least one buffer portion 53 when the object (T) is made of softwood. The desired effects may still be achieved if the number of each of the at least one reinforcement member 75, the at least one protrusion portion 73, and the at least one buffer portion 53 is not adjusted according to the descriptions above, but the manufacturing cost of the screw may increase. Moreover, when the length of each of the at least one reinforcement member 75, the at least one protrusion portion 73, and the at least one buffer portion 53 in the extending direction of the axis (L) is greater, the operation angle (Ar) may be more adjustable.

In summary, by virtue of the operation angle (Ar), which is defined by the first thread surface 71 and the second thread surface 72, being greater than the main thread angle (As) of the main thread 5, the at least one buffer thread 7 may generate a relatively large spiral space during the drilling process, and the dregs that are generated by the drill thread 6 when cutting the object (T) may be guided and discharged toward the at least one buffer thread 7. Compared with a conventional screw that guides dregs from a drill thread thereof directly to a main thread thereof, the at least one buffer thread 7 of the screw prevents the dregs from clogging the drilled hole around the main thread 5. Consequently, the at least one buffer thread 7 buffers accumulation of the dregs to reduce the pressures in the drilled hole, and the dregs are guided and discharged more smoothly and efficiently, thereby reducing the resistance during the drilling process. Therefore, the purpose of the present disclosure is indeed achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A screw comprising:
a head (2);
a rod body (3) extending from the head (2) along an axis (L);
a tip tail (4) formed on one end of the rod body (3) opposite to the head (2), and tapering away from the rod body (3) along the axis (L);
a main thread (5) helically extending around the rod body (3); and
a drill thread (6) helically extending around the tip tail (4);
**characterized by**:
at least one buffer thread (7) formed on at least one of the rod body (3) and the tip tail (4), and having a first thread surface (71) that faces the head (2), and a second thread surface (72) that is connected to the first thread surface (71) and that cooperates with the first thread surface (71) to define an operation angle (Ar), the main thread (5) having an upper thread surface (51) that faces the head (2), and a lower thread surface (52) that cooperates with the upper thread surface (51) to define a main thread angle (As), a height of the drill thread (6) being shorter than a height of the main thread (5) in a radial direction perpendicular to an extending direction of the axis (L), the operation angle (Ar) being greater than the main thread angle (As).

2. The screw as claimed in claim 1, wherein the at least one buffer thread (7) is formed between the main thread (5) and the drill thread (6).

3. The screw as claimed in any one of claims 1 and 2, wherein one of the first thread surface (71) and the second thread surface (72) of the at least one buffer thread (7) has at least one protrusion portion (73), a number of the at least one protrusion portion (73) ranging from 1 to 6.

4. The screw as claimed in claim 3, wherein:
the at least one buffer thread (7) further has an outer thread edge (74) that is located at a junction of the first thread surface (71) and the second thread surface (72) thereof;
the at least one protrusion portion (73) of the one of the first thread surface (71) and the second thread surface (72) of the at least one buffer thread (7) has an outer end (731) that is distal to the rod body (3), and an inner end (732) that is opposite to the outer end (731), and that is proximate to and connected to the rod body (3);
the outer end (731) of the at least one protrusion portion (73) of the at least one buffer thread (7) coincides with the outer thread edge (74) of the at least one buffer thread (7), or is spaced apart from the outer thread edge (74) of the at least one buffer thread (7); and
a length of the inner end (732) of the at least one protrusion portion (73) of the at least one buffer thread (7) in the extending direction of the axis (L) is no smaller than a length of the outer end (731) of the at least one protrusion portion (73) of the at least one buffer thread (7) in the extending direction of the axis (L).

5. The screw as claimed in any one of claims 3 and 4, wherein
a length of the at least one protrusion portion (73) of the at least one buffer thread (7) in the extending direction of the axis (L) ranges from a quarter to three-fifths of a length of a portion of the main thread (5) in the extending direction of the axis (L) adjacent to the rod body (3), or ranges from one-eighth to a half of a length that is a number derived by subtracting the main thread angle (As) from the operation angle (Ar) and that is measured in millimeters as a unit thereof;
a height of the at least one protrusion portion (73) of the at least one buffer thread (7) in the radial direction perpendicular to the extending direction of the axis (L) is a quarter of, a half of, two-thirds of, or equal to a half of a difference between a major diameter of the at least one buffer thread (7) and a minor diameter of the at least one buffer thread (7) in the radial direction; and
the at least one protrusion portion (73) of the at least one buffer thread (7) extends away from the rod body (3) in the radial direction, and cooperates with the axis (L) to define a central angle that ranges from 2 degrees to 11 degrees.

6. The screw as claimed in any one of claims 3 to 5, wherein a width of the at least one protrusion portion (73) of the at least one buffer thread (7) narrows, widens, or remains unchanged as the at least one protrusion portion (73) of the at least one buffer thread (7) extends in the radial direction.

7. The screw as claimed in any one of claims 1 and 2, wherein the at least one buffer thread (7) includes at least one reinforcement member (75) that protrudes from at least one of the first thread surface (71) and the second thread surface (72) thereof, a number of the at least one reinforcement member (75) ranging from 1 to 8.

8. The screw as claimed in claim 7, wherein:
the at least one buffer thread (7) further has an outer thread edge (74) that is located at a junction of the first thread surface (71) and the second thread surface (72) thereof;
the at least one reinforcement member (75) of the at least one buffer thread (7) has an inner end (751) that is proximate to and connected to the rod body (3), and an outer end (752) that is distal to the rod body (3);
a length of the inner end (751) of the at least one reinforcement member (75) of the at least one buffer thread (7) in the extending direction of the axis (L) is no smaller than a length of the outer end (752) of the at least one reinforcement member (75) of the at least one buffer thread (7) in the extending direction of the axis (L);
the at least one reinforcement member (75) of the at least one buffer thread (7) extends in the radial direction along the at least one of the first thread surface (71) and the second thread surface (72);
a width of the at least one reinforcement member (75) of the at least one buffer thread (7) narrows, widens, or remains unchanged as the at least one reinforcement member (75) of the at least one buffer thread (7) extends in the radial direction; and
the outer end (752) of the at least one reinforcement member (75) of the at least one buffer thread (7) coincides with the outer thread edge (74) of the at least one buffer thread (7), or is spaced apart from the outer thread edge (74) of the at least one buffer thread (7).

9. The screw as claimed in claim 7, wherein:
the at least one reinforcement member (75) of the at least one buffer thread (7) has an inner end (751) that is proximate to and connected to the rod body (3), and an outer end (752) that is distal to the rod body (3);
a length of the inner end (751) of the at least one reinforcement member (75) of the at least one buffer thread (7) in the extending direction of the axis (L) is no smaller than a length of the outer end (752) of the at least one reinforcement member (75) of the at least one buffer thread (7) in the extending direction of the axis (L); and
the at least one reinforcement member (75) of the at least one buffer thread (7) extends in a circumferential direction of the rod body (3), and partially surrounds the axis (L) such that the at least one reinforcement member (75) cooperates with the axis (L) to define a central angle which ranges from 36 degrees to 120 degrees.

10. The screw as claimed in any one of claims 7 to 9, wherein a junction of the first thread surface (71) and the second thread surface (72) of the at least one buffer thread (7) defines a crest line (R), the at least one reinforcement member (75) including a plurality of reinforcement members (75) that protrude from the first thread surface (71) and the second thread surface (72), a portion of the plurality of reinforcement members (75) that protrude from the first thread surface (71) and another portion of the plurality of reinforcement members (75) that protrude from the second thread surface (72) being arranged in an opposite arrangement or in an alternating arrangement along the crest line (R).

11. The screw as claimed in any one of claims 7 to 10, wherein:
a length of the at least one reinforcement member (75) of the at least one buffer thread (7) in the extending direction of the axis (L) ranges from one-tenth to a half of a length of a portion of the main thread (5) in the extending direction of the axis (L) adjacent to the rod body (3), or ranges from one-tenth to three-fourths of a length that is a number derived by subtracting the main thread angle (As) from the operation angle (Ar) and that is measured in millimeters as a unit thereof;
a height of the at least one reinforcement member (75) of the at least one buffer thread (7) in the radial direction perpendicular to the extending direction of the axis (L) is one-sixth of, a quarter of, a half of, or equal to a half of a difference between a major diameter of the at least one buffer thread (7) and a minor diameter of the at least one buffer thread (7) in the radial direction; and
the at least one reinforcement member (75) of the at least one buffer thread (7) extends away from the rod body (3) in the radial direction along the at least one of the first thread surface (71) and the second thread surface (72) thereof, and cooperates with the axis (L) to define a central angle that ranges from 1 degree to 15 degrees.

12. The screw as claimed in any one of claims 1 to 11, further comprising at least one rib (9) formed on the rod body (3), the at least one rib (9) intersecting at least one of the main thread (5), the drill thread (6) and the at least one buffer thread (7), a projection of the at least one rib (9) at least partially overlapping a projection of the at least one of the main thread (5), the drill thread (6) and the at least one buffer thread (7).

13. The screw as claimed in any one of claims 1 to 12, wherein the at least one buffer thread (7) continuously extends from the main thread (5).

14. The screw as claimed in any one of claims 1 to 12, wherein the main thread (5) is not directly connected to the drill thread (6).

15. The screw as claimed in any one of claims 1 to 9, wherein a junction of the first thread surface (71) and the second thread surface (72) of the at least one buffer thread (7) defines a crest line (R), the at least one buffer thread (7) being symmetrical or asymmetrical along the crest line (R).

16. The screw as claimed in any one of claims 1 to 15, wherein the at least one buffer thread (7) has at least two turns, the operation angle (Ar) of the at least one buffer thread (7) in one of the at least two turns of the at least one buffer thread (7) being equal to the operation angle (Ar) of the at least one buffer thread (7) in another one of the at least two turns of the at least one buffer thread (7).

17. The screw as claimed in any one of claims 1 to 15, wherein the at least one buffer thread (7) has at least two turns, the operation angle (Ar) of the at least one buffer thread (7) in one of the at least two turns of the at least one buffer thread (7) being different from the operation angle (Ar) of the at least one buffer thread (7) in another one of the at least two turns of the at least one buffer thread (7).

18. The screw as claimed in claim 17, wherein the at least one buffer thread (7) has a plurality of turns, the operation angle (Ar) of the at least one buffer thread (7) increasing as the at least one buffer thread (7) extends toward the head (2).

19. The screw as claimed in claim 17, wherein the at least one buffer thread (7) has a plurality of turns, the operation angle (Ar) of the at least one buffer thread (7) decreasing as the at least one buffer thread (7) extends toward the head (2).

20. The screw as claimed in claim 17, wherein the at least one buffer thread (7) has a plurality of turns, the operation angle (Ar) of the at least one buffer thread (7) arbitrarily varying as the at least one buffer thread (7) extends toward the head (2).

21. The screw as claimed in any one of claims 1 to 13, wherein the at least one buffer thread (7) helically extends from the tip tail (4) to the rod body (3), the at least one buffer thread (7) having at least one turn on the rod body (3), and being directly connected to the main thread (5).

22. The screw as claimed in any one of claims 1 to 21, wherein the at least one buffer thread (7) is formed on the rod body (3), a height of the at least one buffer thread (7) in the radial direction perpendicular to the extending direction of the axis (L) being no greater than the height of the main thread (5) in the radial direction.

23. The screw as claimed in any one of claims 1 to 22, wherein the at least one buffer thread (7) further has a plurality of thread grooves (70) that are indented toward the axis (L) in the radial direction, that surround the axis (L), and that are spaced apart from each other.

24. The screw as claimed in any one of claims 1 to 23, wherein the operation angle (Ar) is 20 degrees greater than the main thread angle (As).

25. The screw as claimed in any one of claims 1 to 23, wherein the operation angle (Ar) and the main thread angle (As) have a maximum difference and a minimum difference therebetween, the minimum difference being one-third of the maximum difference.

26. A screw comprising:
a head (2);
a rod body (3) extending from the head (2) along an axis (L);
a tip tail (4) formed on one end of the rod body (3) opposite to the head (2), and tapering away from the rod body (3) along the axis (L);
a main thread (5) helically extending around the rod body (3); and
a drill thread (6) helically extending around the tip tail (4);
**characterized in that**:
the main thread (5) having an upper thread surface (51) that faces the head (2), a lower thread surface (52) that cooperates with the upper thread surface (51) to define a main thread angle (As), and at least one buffer portion (53) that is formed on at least one section of one of the upper thread surface (51) and the lower thread surface (52), at least one section of the main thread (5) that has the at least one buffer portion (53) being defined as at least one buffer thread (7), the at least one buffer thread (7) having a first thread surface (71) that faces the head (2), and a second thread surface (72) that is connected to the first thread surface (71) and that cooperates with the first thread surface (71) to define an operation angle (Ar), the operation angle (Ar) being greater than the main thread angle (As), a height of the drill thread (6) being shorter than a height of the main thread (5) in a radial direction perpendicular to an extending direction of the axis (L).

27. The screw as claimed in claim 26, wherein:
the at least one buffer thread (7) further has an outer thread edge (74) that is located at a junction of the first thread surface (71) and the second thread surface (72) thereof;
the at least one buffer thread (7) includes at least one reinforcement member (75) that protrudes from at least one of the first thread surface (71) and the second thread surface (72) thereof;
the at least one reinforcement member (75) of the at least one buffer thread (7) has an inner end (751) that is proximate to and connected to the rod body (3), and an outer end (752) that is distal to the rod body (3);
a length of the inner end (751) of the at least one reinforcement member (75) of the at least one buffer thread (7) in the extending direction of the axis (L) is no smaller than a length of the outer end (752) of the at least one reinforcement member (75) of the at least one buffer thread (7) in the extending direction of the axis (L); and
the outer end (752) of the at least one reinforcement member (75) of the at least one buffer thread (7) coincides with the outer thread edge (74) of the at least one buffer thread (7), or is spaced apart from the outer thread edge (74) of the at least one buffer thread (7).

28. The screw as claimed in any one of claims 26 and 27, wherein:
the at least one buffer portion (53) of the main thread (5) extends in the radial direction along the at least one section of the one of the upper thread surface (51) and the lower thread surface (52);
a width of the at least one buffer portion (53) of the main thread (5) narrows, widens, or remains unchanged as the at least one buffer portion (53) of the main thread (5) extends in the radial direction; and
a height of the at least one section of the main thread (5) that has the at least one buffer portion (53) in the radial direction perpendicular to the extending direction of the axis (L) being no greater than a height of another section of the main thread (5) without the at least one buffer portion (53) in the radial direction.

29. The screw as claimed in any one of claims 26 and 27, wherein the at least one buffer portion (53) of the main thread (5) extends in a circumferential direction of the rod body (3), and partially surrounds the axis (L) such that the at least one buffer portion (53) of the main thread (5) cooperates with the axis (L) to define a central angle which ranges from 36 degrees to 180 degrees.

30. The screw as claimed in in any one of claims 26 and 27, wherein:
a length of the at least one buffer portion (53) of the al least one section of the main thread (5) in the extending direction of the axis (L) ranges from one-ninth to three-fifths of a length of another section of the main thread (5) that is without the at least one buffer portion (53), that is adjacent to the rod body (3), and that is measured in the extending direction of the axis (L); and
a height of the at least one buffer portion (53) of the al least one section of the main thread (5) in the radial direction perpendicular to the extending direction of the axis (L) is one-sixth of, a quarter of, a half of, two-thirds of, or equal to a half of a difference between a major diameter of the another section of the main thread (5) without the at least one buffer portion (53) and a minor diameter of the another section of the main thread (5) without the at least one buffer portion (53) in the radial direction.

31. The screw as claimed in in any one of claims 26, wherein:
the at least one buffer thread (7) further has an outer thread edge (74) that is located at a junction of the first thread surface (71) and the second thread surface (72) thereof;
the at least one buffer portion (53) of the at least one section of the main thread (5) has an outer end that is distal to the rod body (3), and an inner end that is opposite to the outer end, and that is proximate to and connected to the rod body (3);
a length of the inner end of the at least one buffer portion (53) of the at least one section of the main thread (5) in the extending direction of the axis (L) is no smaller than a length of the outer end of the at least one buffer portion (53) of the at least one section of the main thread (5) in the extending direction of the axis (L); and
the outer end of the at least one buffer portion (53) of the at least one section of the main thread (5) coincides with the outer thread edge (74) of the at least one buffer thread (7), or is spaced apart from the outer thread edge (74) of the at least one buffer thread (7).

32. The screw as claimed in any one of claims 26 to 31, further comprising a plurality of ribs (9) formed on the rod body (3), the plurality of ribs (9) intersecting at least one of the main thread (5) and the drill thread (6).

33. The screw as claimed in any one of claims 26 to 32, wherein the at least one buffer thread (7) helically extends from the tip tail (4) to the rod body (3), and has at least one turn on the rod body (3).

34. The screw as claimed in any one of claims 26 to 32, wherein the at least one buffer thread (7) further has a plurality of thread grooves (70) that are indented toward the axis (L) in the radial direction, that surround the axis (L), and that are spaced apart from each other.

35. The screw as claimed in any one of claims 26 to 32, wherein the lower thread surface (52) of the main thread (5) is connected to the upper thread surface (51) of the main thread (5), a junction of the upper thread surface (51) and the lower thread surface (52) of the main thread (5) defining a crest line (S), the main thread (5) having a plurality of buffer portions (53) that are formed on the upper thread surface (51) and the lower thread surface (52), a portion of the plurality of buffer portions (53) that are formed on the upper thread surface (51) and another portion of the plurality of buffer portions (53) that are formed on the lower thread surface (52) being arranged in an opposite arrangement or in an alternating arrangement along the crest line (S).
